# EUROPEAN PATENT APPLICATION

(11) **EP 4 561 171 A1**
(43) Date of publication of application: **28.05.2025**
(21) Application number: 23845248.6
(22) Date of filing: 30.06.2023
(51) Int. Cl.: H04W 36/00

(54) **CELL MEASUREMENT METHOD AND APPARATUS**

(30) Priority: 25.07.2022 CN 202210880569
(71) Applicant: Huawei Technologies Co., Ltd., Shenzhen, Guangdong 518129 (CN)
(72) Inventor: LI, Jiaojiao, Shenzhen, Guangdong 518129 (CN); QIANG, Li, Shenzhen, Guangdong 518129 (CN); CHANG, Junren, Shenzhen, Guangdong 518129 (CN); MAO, Yingchao, Shenzhen, Guangdong 518129 (CN); XIE, Xi, Shenzhen, Guangdong 518129 (CN)
(74) Representative: Körber, Martin Hans
(86) International application number: PCT/CN2023/105243
(87) International publication number: WO 2024/022035

(57) **Abstract**

This application discloses a cell measurement method and an apparatus, where the method includes: A first network device determines first indication information, where the first indication information indicates at least one candidate cell and a first cell set corresponding to a first candidate cell in the at least one candidate cell, and the first cell set includes at least one cell. The first network device sends the first indication information. A terminal device receives the first indication information. The terminal device measures a cell in the first cell set based on the first indication information. A serving cell of the terminal device is the first candidate cell. In this manner, a range of cells measured and evaluated by the terminal device is specified, and cell handover efficiency and a cell handover success rate are improved.

## Description

This application claims priority to Chinese Patent Application No. 202210880569.6, filed with the China National Intellectual Property Administration on July 25, 2022 and entitled "CELL MEASUREMENT METHOD AND APPARATUS", which is incorporated herein by reference in its entirety.

### TECHNICAL FIELD

This application relates to the field of wireless communication technologies, and in particular, to a cell measurement method and an apparatus.

### BACKGROUND

In a wireless communication network, continuous cell handover needs to be performed in many scenarios. For example, conditional primary secondary cell addition or change (Conditional PSCell Addition/Change, CPAC) or conditional layer 1 or layer 2 handover (Conditional L1/L2 Handover) is performed, where a layer 1 is a physical layer, and a layer 2 includes a media access control (Media Access Control, MAC) layer, a radio link control (Radio Link Control, RLC) layer, and a packet data convergence control (Packet Data Convergence Control, PDCP) layer. During the CPAC or conditional L1/L2 handover, after completing CPAC or conditional L1/L2 handover for one time, a terminal device may not release CPAC configuration or L1/L2 pre-configuration information, but continue to maintain the CPAC configuration or L1/L2 pre-configuration information. Therefore, in some cases, the network may need to configure more candidate cells for the terminal device, to perform the continuous cell handover. As the terminal device moves, not all candidate cells are suitable for the terminal device to execute a cell handover process. In this case, if the terminal device measures or evaluates all candidate cells to determine a target cell for handover, there are problems of an unclear range of measured cells, low cell handover efficiency, an unnecessary power overhead increase, and the like.

### SUMMARY

Embodiments of this application provide a cell measurement method and an apparatus, to specify a range of cells measured and evaluated by a terminal device, and improve cell handover efficiency and a cell handover success rate.

According to a first aspect, a cell measurement method is provided. The method may be performed by a terminal device, or may be performed by a chip used in a terminal device. The following uses an example in which the method is performed by the terminal device for description. The terminal device receives first indication information, where the first indication information indicates at least one candidate cell and a first cell set corresponding to a first candidate cell in the at least one candidate cell, and the first cell set includes at least one cell. The terminal device measures a cell in the first cell set based on the first indication information, where a serving cell of the terminal device is the first candidate cell.

It may be learned that, in this embodiment of this application, the first indication information is obtained, where the first indication information indicates the at least one candidate cell and the first cell set corresponding to the first candidate cell in the at least one candidate cell. The terminal device performs cell measurement based on the first cell set indicated by the first indication information. In this process, the first cell set corresponding to the serving cell is determined, to accurately determine a range of cells measured and evaluated by the terminal device during cell handover, and improve handover efficiency. In addition, a cell measured and evaluated by the UE is not limited to the at least one candidate cell configured for the terminal device, and a cell handover success rate of the terminal device can be improved.

In a possible design, the at least one candidate cell is at least one candidate primary secondary cell for conditional primary secondary cell addition CPA or conditional primary secondary cell change CPC.

In this embodiment of this application, the cell measurement method is applied to a conditional primary secondary cell addition CPA or conditional primary secondary cell change CPC scenario. In this way, in the CPA or CPC scenario, especially when there is continuous handover between cells, a range of cells measured and evaluated by the terminal device can be determined based on the serving cell of the terminal device, and the cell handover efficiency and the cell handover success rate can be improved.

In a possible design, the at least one candidate cell is at least one candidate primary cell for layer 1/layer 2 handover.

In this embodiment of this application, the cell measurement method is applied to a layer 1/layer 2 handover scenario. In this way, in the layer 1/layer 2 scenario, especially when there is continuous handover between cells, a range of cells measured and evaluated by the terminal device can be determined based on the serving cell of the terminal device, and the cell handover efficiency and the cell handover success rate are improved.

In a possible design, that the first indication information indicates the first cell set corresponding to the first candidate cell in the at least one candidate cell includes: the first indication information indicates, by indicating a physical cell identifier PCI of the at least one cell, the first cell set corresponding to the first candidate cell; the first indication information indicates, by indicating a configuration identifier of the at least one cell, the first cell set corresponding to the first candidate cell, where the configuration identifier is associated with a configuration of a candidate cell in the at least one candidate cell; or the first indication information indicates, by using bit mapping indication information, the first cell set corresponding to the first candidate cell.

In a possible design, the at least one cell included in the first cell set is a cell in the at least one candidate cell.

In this embodiment of this application, the cell in the first cell set is at least one of the candidate cell. In this case, a cell measured and evaluated by the terminal device during handover is usually less than a set including all candidate cells. In this way, a quantity of cells that need to be measured and evaluated by the terminal device during cell handover can be reduced, the cell handover efficiency can be improved, and power consumption of measuring and evaluating a cell can be reduced.

According to a second aspect, a cell measurement method is provided. The method may be performed by a network device, or may be performed by a chip used in a network device. The following uses an example in which the method is performed by the network device for description. The network device determines first indication information, where the first indication information indicates at least one candidate cell and a first cell set corresponding to a first candidate cell in the at least one candidate cell, and the first cell set includes at least one cell. The network device sends the first indication information.

In a possible design, the at least one candidate cell is at least one candidate primary secondary cell for conditional primary secondary cell addition CPA or conditional primary secondary cell change CPC.

In a possible design, the at least one candidate cell is at least one candidate primary cell for layer 1/layer 2 handover.

In a possible design, that the first indication information indicates the first cell set corresponding to the first candidate cell in the at least one candidate cell includes: the first indication information indicates, by indicating a physical cell identifier PCI of the at least one cell, the first cell set corresponding to the first candidate cell; the first indication information indicates, by indicating a configuration identifier of the at least one cell, the first cell set corresponding to the first candidate cell, where the configuration identifier is associated with a configuration of a candidate cell in the at least one candidate cell; or the first indication information indicates, by using bit mapping indication information, the first cell set corresponding to the first candidate cell.

In a possible design, the at least one cell included in the first cell set is a cell in the at least one candidate cell.

In a possible design, the method further includes: determining, based on at least one of the following information, the first cell set corresponding to the first candidate cell: a measurement report reported by a terminal device, network topology information, network deployment information, and statistical information.

In a possible design, before the determining the first cell set corresponding to the first candidate cell, the method further includes: sending a request message to a second network device, to request to use a cell of the second network device as one of the at least one candidate cell, receiving feedback information of the second network device, and determining, based on the feedback information, whether to use the cell of the second network device as one of the at least one candidate cell.

In a possible design, the feedback information further indicates a second cell set corresponding to the cell of the second network device; and the method further includes: when the cell of the second network device is used as the first candidate cell, determining, based on the second cell set, a corresponding first cell set.

According to a third aspect, a communication method is provided. The method may be performed by a terminal device, or may be performed by a chip used in a terminal device. The following uses an example in which the method is performed by the terminal device for description. The method includes: The terminal device receives a first message, where the first message includes configuration information of a candidate cell. When a first condition is met, the terminal device sends a second message to a first network device, where the second message is used to request to update the configuration information of the candidate cell, and the first condition includes at least one of the following: signal quality of a serving cell is less than or equal to a first threshold; a quantity of candidate cells that can be detected is less than or equal to a first quantity; or signal quality of the candidate cell is less than or equal to a second threshold.

In this embodiment of this application, when the first condition is met, the terminal device may be triggered to send the second message to the first network device, to request to update the configuration information of the candidate cell. In this way, the terminal device actively requests the network device to update the configuration information of the candidate cell, so that the terminal device can obtain most accurate configuration information of the candidate cell in time, to perform cell handover. This increases a probability of successful cell handover and reduces a cell handover delay caused by a failure in obtaining valid configuration information of the candidate cell in time.

According to a fourth aspect, a communication method is provided. The method may be performed by a terminal device, or may be performed by a chip used in the terminal device. The following uses an example in which the method is performed by the terminal device for description. The method includes: The terminal device receives a first message, where the first message includes configuration information of a candidate cell. When a second condition is met, the terminal device is triggered to send a measurement report to a first network device, where the measurement report includes signal quality of the candidate cell, and the second condition includes at least one of the following: signal quality of a serving cell is less than or equal to a second threshold; a quantity of candidate cells that can be detected by the terminal device is less than or equal to a second quantity; the signal quality of the candidate cell is less than or equal to a third threshold; a serving cell is switched to a first cell, where the first cell is a cell in a first cell set; or signal quality of one or more cells other than the candidate cell is greater than or equal to a fourth threshold.

In this embodiment of this application, when the second condition is met, the terminal device may be triggered to send the measurement report to the first network device. The measurement report is used by the first network device as a reference for how to update the configuration information of the candidate cell. In this way, the terminal device actively sends the measurement report to the network device. In comparison with a conventional technology in which the measurement report is fed back based on a measurement configuration or the measurement report is periodically sent, the measurement report can be fed back more flexibly and in a more timely manner, so that the network device can determine a solution of updating the configuration information of the candidate cell more quickly and accurately. Further, a success rate of a cell handover process is increased.

In a possible design, the configuration information of the candidate cell is conditional primary secondary cell addition CPA or conditional primary secondary cell change CPC configuration information, and a second message is used to update the CPA or CPC configuration information; or the configuration information of the candidate cell is configuration information of a candidate cell for layer 1/layer 2 handover, and a second message is used to request to update the layer 1/layer 2 handover configuration information.

According to the method used in this embodiment of this application, in a CPA or CPC scenario, especially when there is continuous handover between cells, in comparison with a general case in which CPAC configuration information (that is, the CPA or CPC configuration information) is obtained only when an MN determines to add or change an SN, the network device can update the CPAC configuration information in a more timely manner based on the received measurement report, and SN handover efficiency and an SN handover success rate can be improved. Similarly, in comparison with a general case in which the measurement report is obtained and the layer 1/layer 2 handover configuration information is updated only when a CU delivers the measurement configuration, in the method in this embodiment of this application, the layer 1/layer 2 handover configuration information can be updated more quickly and in a more timely manner, and DU handover efficiency and a DU handover success rate can be further improved.

In a possible design, the method further includes: The terminal device receives a third message, where the third message indicates the terminal device to switch to a target cell, and the target cell does not belong to the candidate cell. The terminal device switches to the target cell, and performs any one of the following: considering the configuration information of the candidate cell valid or stored; or determining, based on indication information from the first network device, that the configuration information of the candidate cell is valid or invalid.

In this embodiment of this application, when the terminal device receives the indication information indicating that the terminal device switches to the target cell that does not belong to the candidate cell, the terminal device may determine, based on preset information, to consider the configuration information of the candidate cell valid or stored, to reduce resource overheads caused by re-delivering the configuration information of the candidate cell when the terminal device is switched back to a target cell in the candidate cell. Alternatively, the terminal device determines the configuration information of the candidate cell based on the indication information of the first network device, so that flexibility of processing the configuration information of the candidate cell by the terminal device can be improved.

In a possible design, the method further includes: The terminal device triggers a radio resource management RRC reestablishment process, where a cell selected in the RRC reestablishment process belongs to the first network device. The terminal device considers the configuration information of the candidate cell valid or stored.

In this embodiment of this application, if the terminal device triggers the RRC reestablishment process, and the selected cell belongs to the first network device, it indicates that the serving cell of the terminal device does not change, or the terminal device is close to the original serving cell, and the previously received configuration information of the candidate cell may continue to be retained or used. This reduces resource overheads for retransmitting the configuration information of the candidate cell.

According to a fifth aspect, a communication method is provided. The method may be performed by a first network device, or may be performed by a chip used in the first network device. The following uses an example in which the method is performed by the first network device for description. The method includes: The first network device determines configuration information of a candidate cell. The first network device sends a first message, where the first message includes the configuration information of the candidate cell. The first network device receives the first message or a measurement report, where the first message is used to request to update the configuration information of the candidate cell, and the measurement report includes signal quality of the candidate cell.

In a possible design, the configuration information of the candidate cell is conditional primary secondary cell addition CPA or conditional primary secondary cell change CPC configuration information, and the first message is used to request to update the CPA or CPC configuration information; or the configuration information of the candidate cell is configuration information of a candidate cell for layer 1/layer 2 handover, and the first message is used to request to update the layer 1/layer 2 handover configuration information.

According to a sixth aspect, a communication apparatus is provided. The apparatus includes: a receiving module, configured to receive first indication information, where the first indication information indicates at least one candidate cell and a first cell set corresponding to a first candidate cell in the at least one candidate cell, and the first cell set includes at least one cell; and a processing module, used by a terminal device to measure a cell in the first cell set based on the first indication information, where a serving cell of the terminal device is the first candidate cell.

In a possible design, the at least one candidate cell is at least one candidate primary secondary cell for conditional primary secondary cell addition CPA or conditional primary secondary cell change CPC.

In a possible design, the at least one candidate cell is at least one candidate primary cell for layer 1/layer 2 handover.

In a possible design, the first indication information indicates the at least one cell in the first cell set in any one of the following manners: a physical cell identifier PCI of the at least one cell; a configuration identifier of the at least one cell, where the configuration identifier is associated with a configuration of a candidate cell in the at least one candidate cell; or bit mapping indication information.

In a possible design, the at least one cell included in the first cell set is a cell in the at least one candidate cell.

According to a seventh aspect, a communication apparatus is provided. The apparatus includes: a processing module, configured to determine first indication information, where the first indication information indicates at least one candidate cell and a first cell set corresponding to a first candidate cell in the at least one candidate cell, and the first cell set includes at least one cell; and a sending module, configured to send the first indication information.

In a possible design, the at least one candidate cell is at least one candidate primary secondary cell for conditional primary secondary cell addition CPA or conditional primary secondary cell change CPC.

In a possible design, the at least one candidate cell is at least one candidate primary cell for layer 1/layer 2 handover.

In a possible design, the first indication information indicates the at least one cell in the first cell set in at least one of the following manners: a physical cell identifier PCI of the at least one cell; a configuration identifier of the at least one cell, where the configuration identifier is associated with a configuration of a candidate cell in the at least one candidate cell; or bit mapping indication information.

In a possible design, the at least one cell included in the first cell set is a cell in the at least one candidate cell.

According to an eighth aspect, a communication apparatus is provided. The apparatus includes: a receiving module, configured to receive a first message, where the first message includes configuration information of a candidate cell; and a sending module, configured to: when a first condition is met, send a second message to a first network device, where the second message is used to request to update the configuration information of the candidate cell, and the first condition includes at least one of the following: signal quality of a serving cell is less than or equal to a first threshold; a quantity of candidate cells that can be detected is less than or equal to a first quantity; or signal quality of the candidate cell is less than or equal to a second threshold.

According to a ninth aspect, a communication apparatus is provided. The apparatus includes: a receiving module, configured to receive a first message, where the first message includes configuration information of a candidate cell; and a sending module, configured to: when a second condition is met, trigger sending of a measurement report to a first network device, where the measurement report includes signal quality of the candidate cell, and the second condition includes at least one of the following: signal quality of a serving cell is less than or equal to a second threshold; a quantity of candidate cells that can be detected is less than or equal to a second quantity; the signal quality of the candidate cell is less than or equal to a third threshold; a serving cell is switched to a first cell, where the first cell is a cell in a first cell set; or signal quality of one or more cells other than the candidate cell is greater than or equal to a fourth threshold.

In a possible design, the configuration information of the candidate cell is conditional primary secondary cell addition CPA or conditional primary secondary cell change CPC configuration information, and a second message is used to update the CPA or CPC configuration information; or
the configuration information of the candidate cell is configuration information of a candidate cell for layer 1/layer 2 handover, and a second message is used to request to update the layer 1/layer 2 handover configuration information.

In a possible design, the receiving module is further configured to receive a third message, where the third message indicates the apparatus to switch to a target cell, and the target cell does not belong to the candidate cell. The apparatus further includes a processing module, configured to: perform handover to the target cell, and perform any one of the following: considering the configuration information of the candidate cell valid or stored; or determining, based on indication information from the first network device, that the configuration information of the candidate cell is valid or invalid.

In a possible design, the apparatus includes the processing module, configured to: trigger a radio resource management RRC reestablishment process, where a cell selected in the RRC reestablishment process belongs to the first network device; and consider the configuration information of the candidate cell valid or stored.

According to a tenth aspect, a communication apparatus is provided. The apparatus includes: a processing module, configured to determine configuration information of a candidate cell; a sending module, configured to send a first message, where the first message includes the configuration information of the candidate cell; and a receiving module, configured to receive the first message or a measurement report, where the first message is used to request to update the configuration information of the candidate cell, and the measurement report includes signal quality of the candidate cell.

In a possible design, the configuration information of the candidate cell is conditional primary secondary cell addition CPA or conditional primary secondary cell change CPC configuration information, and the first message is used to request to update the CPA or CPC configuration information; or the configuration information of the candidate cell is configuration information of a candidate cell for layer 1/layer 2 handover, and the first message is used to request to update the layer 1/layer 2 handover configuration information.

According to an eleventh aspect, an embodiment of this application provides a terminal device, including:
a memory, configured to store instructions; and
at least one processor, coupled to the memory, where
when the at least one processor executes the instructions, the instructions enable the processor to perform the method in any one of the first aspect, the third aspect, or the fourth aspect.

According to a twelfth aspect, an embodiment of this application provides a network device, including:
a memory, configured to store instructions; and
at least one processor, coupled to the memory, where
when the at least one processor executes the instructions, the instructions enable the processor to perform the method in any one of the second aspect or the fifth aspect.

According to a thirteenth aspect, an embodiment of this application provides a chip system, including a processor. The processor is coupled to a memory, and the memory is configured to store a program or instructions. When the program or the instructions are executed by the processor, the chip system is enabled to implement the method in any one of the first aspect to the fifth aspect.

Optionally, the chip system further includes an interface circuit, and the interface circuit is configured to exchange code instructions to the processor.

Optionally, there may be one or more processors in the chip system, and the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a fourteenth aspect, an embodiment of this application provides a computer-readable storage medium. The computer-readable storage medium stores a computer program or instructions. When the computer program or the instructions are executed, a computer is enabled to perform the method in any one of the first aspect to the fifth aspect.

According to a fifteenth aspect, an embodiment of this application provides a computer program product. When a computer reads and executes the computer program product, the computer is enabled to perform the method in any one of the possible implementations of the first aspect to the fifth aspect.

According to a sixteenth aspect, an embodiment of this application provides a communication system. The communication system includes the apparatus in the sixth aspect and/or the apparatus in the seventh aspect; or the communication system includes the apparatus in the eighth aspect or the ninth aspect and/or the apparatus in the tenth aspect.

### BRIEF DESCRIPTION OF DRAWINGS

To describe technical solutions in embodiments of this application or in a conventional technology more clearly, the following briefly describes accompanying drawings for describing embodiments.
FIG. 1 is a diagram of a structure of dual connectivity according to an embodiment of this application;
FIG. 2 is a diagram of an NG-RAN architecture according to an embodiment of this application;
FIG. 3 is a diagram of a handover process according to an embodiment of this application;
FIG. 4A is a flowchart of CPA according to an embodiment of this application;
FIG. 4B-1 and FIG. 4B-2 are a flowchart of CPC according to an embodiment of this application;

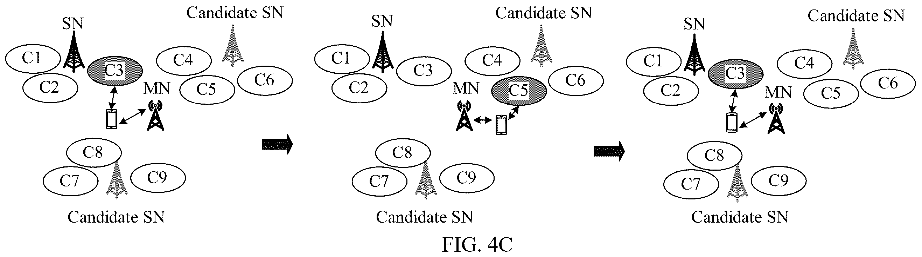

FIG. 4C is a diagram of continuous CPAC according to an embodiment of this application;

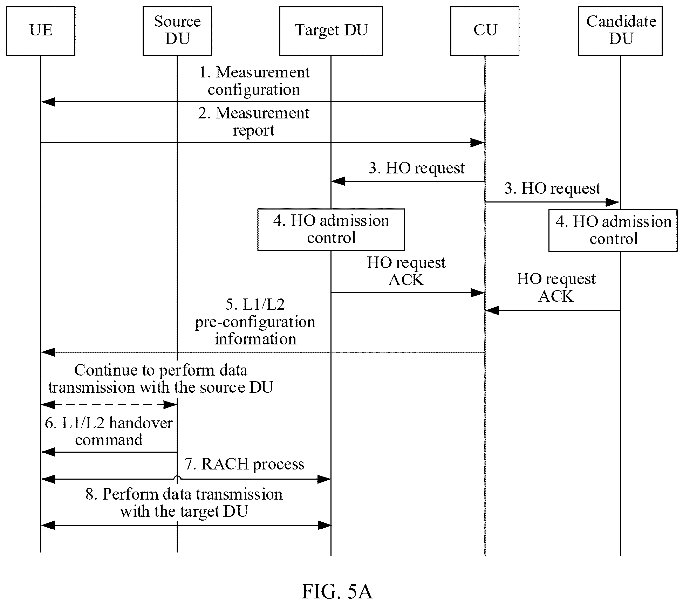

FIG. 5A is a diagram of an L1/L2 handover process according to an embodiment of this application;

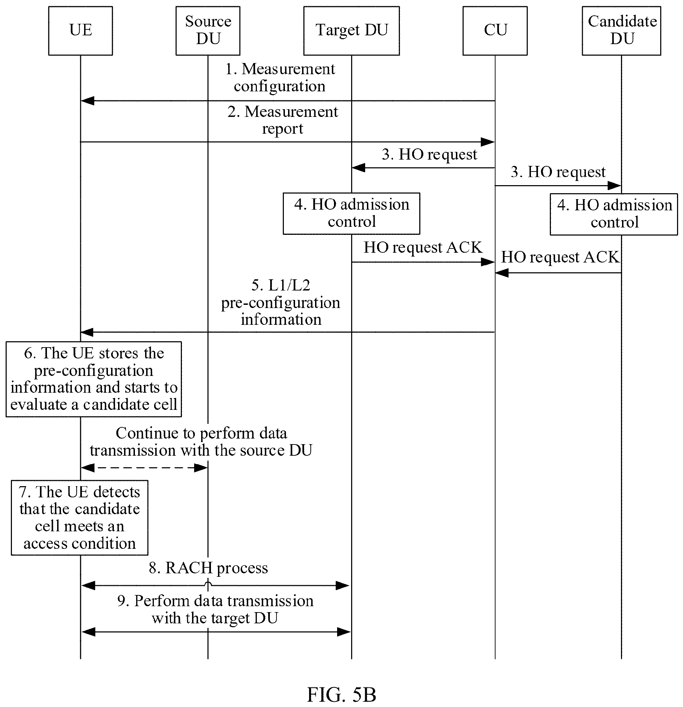

FIG. 5B is a diagram of a conditional L1/L2 handover process according to an embodiment of this application;

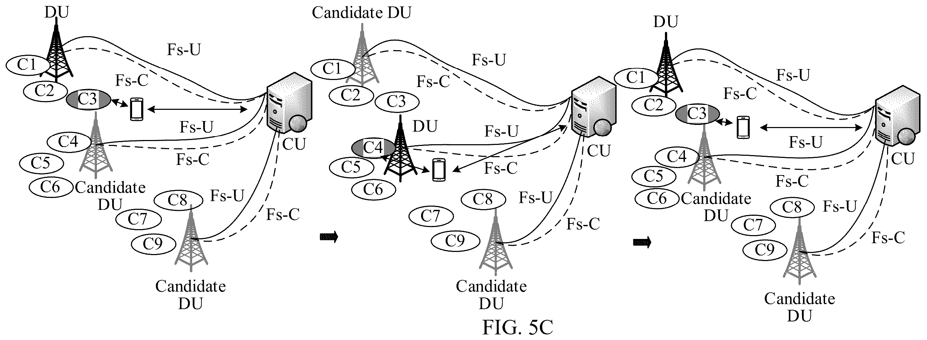

FIG. 5C is a diagram of a continuous L1/L2 handover scenario according to an embodiment of this application;

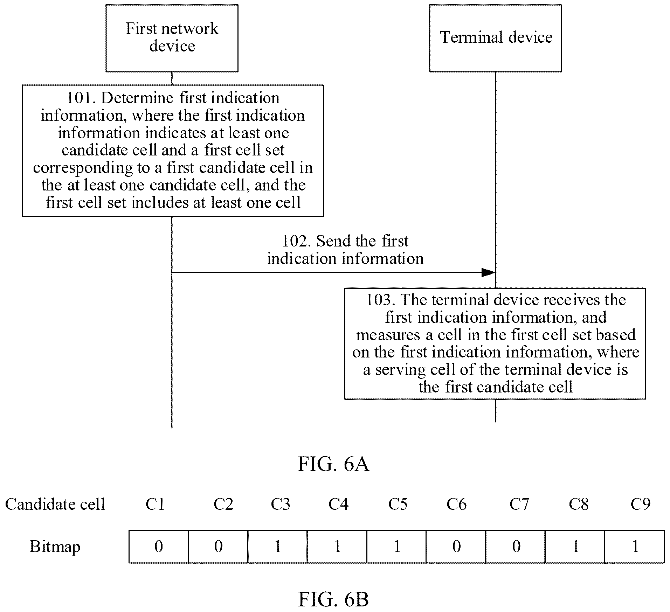

FIG. 6A is a flowchart of a cell measurement method according to an embodiment of this application;
FIG. 6B is a diagram of a correspondence between a bitmap and a candidate cell according to an embodiment of this application;

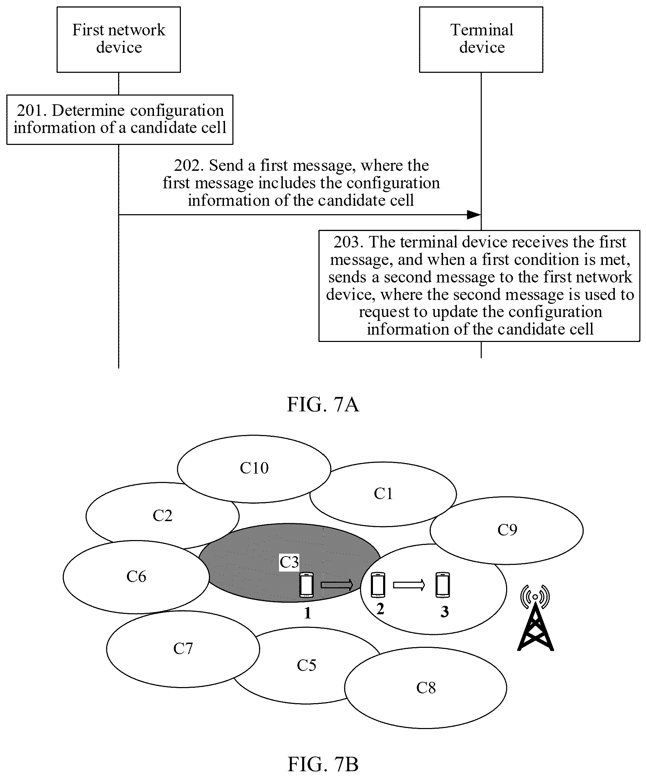

FIG. 7A is a flowchart of a communication method according to an embodiment of this application;
FIG. 7B is a diagram of location movement of a terminal device according to an embodiment of this application;

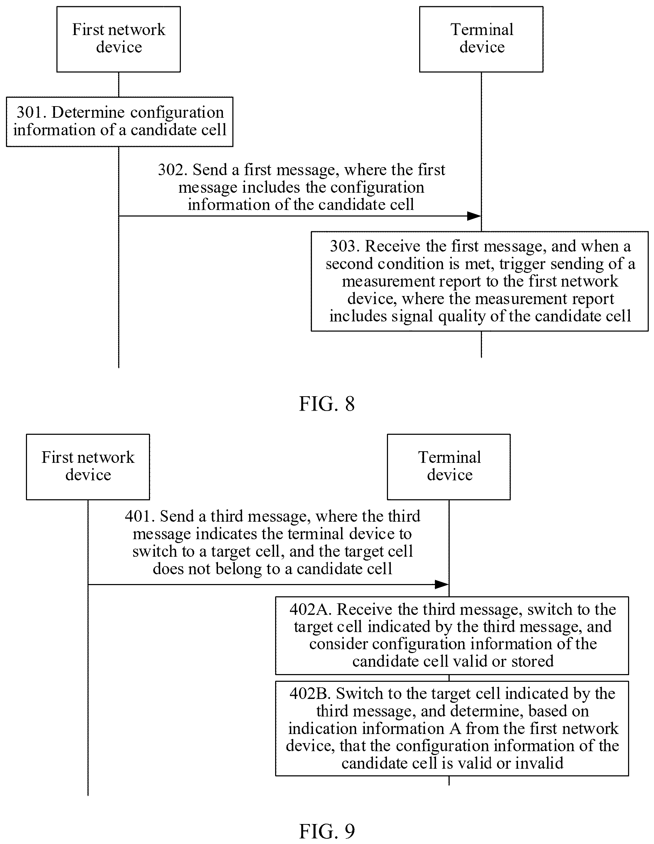

FIG. 8 is a flowchart of a communication method according to an embodiment of this application;
FIG. 9 is a flowchart of a communication method according to an embodiment of this application;

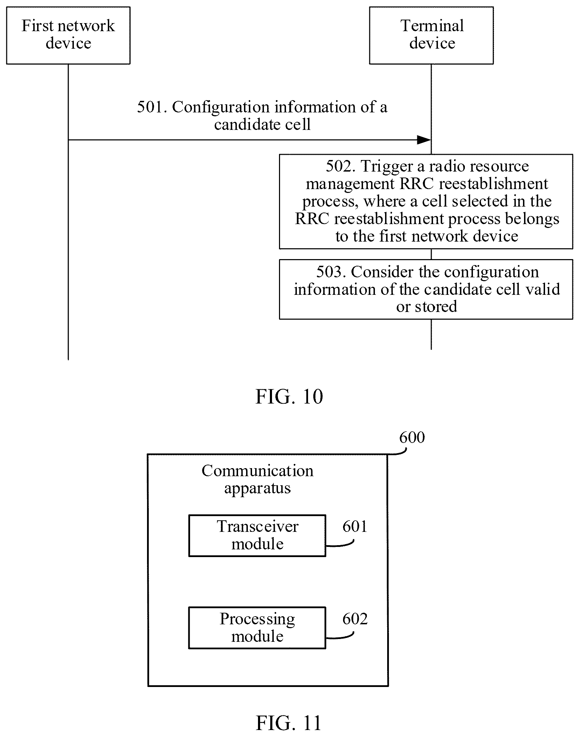

FIG. 10 is a flowchart of another communication method according to an embodiment of this application;
FIG. 11 is a block diagram of a structure of a communication apparatus according to an embodiment of this application; and

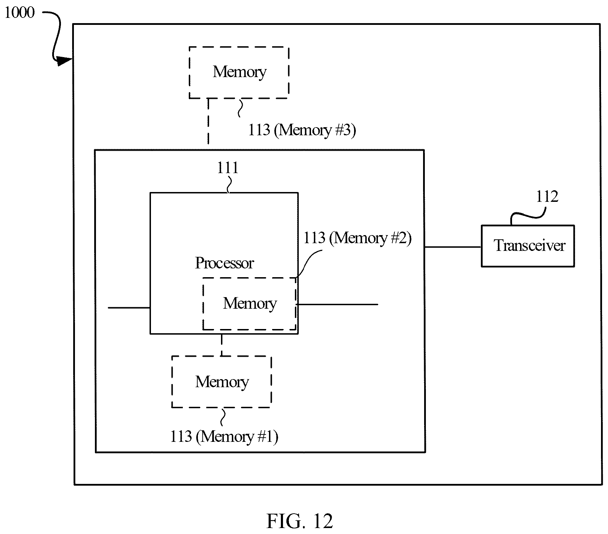

FIG. 12 is a diagram of a hardware structure of a communication apparatus according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including", "having", and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment. Different embodiments herein may also be used in combination.

"A plurality of" means two or more than two. The term "and/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects.

The following first describes the terms in embodiments of this application with reference to figures.

Mobility: Mobility management is to change a serving cell of a terminal device (user equipment, UE), to enable the UE to enjoy a network service regardless of how the UE moves in a network coverage range. Mobility in a connected mode is implemented through handover.

Dual connectivity: The dual connectivity (Dual Connectivity, DC) or multi-connectivity (Multi-Radio Dual Connectivity, MR-DC) means that the UE may simultaneously communicate with two base stations. One of the two base stations may be a new radio (New Radio, NR) base station, and the other may be a long term evolution (Long Term Evolution, LTE) base station. Alternatively, both the two base stations are NR base stations. In the two base stations, a base station that provides a control plane connection with a core network is referred to as a master node (Master Node, MN) (which may also be referred to as a master base station), and a base station that does not provide a control plane connection with the core network is referred to as a secondary node (Secondary Node, SN) (which may also be referred to as a secondary base station).

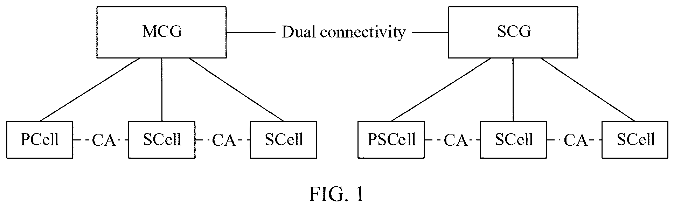

Dual connectivity and carrier aggregation: For details, refer to FIG. 1. FIG. 1 is a diagram of a structure of dual connectivity according to an embodiment of this application. When the dual connectivity is combined with the carrier aggregation (Carrier Aggregation, CA), each base station may include one cell group (Cell Group, CG). A cell group served by the master station is a master cell group (Master Cell Group, MCG). A cell group served by the secondary station is a secondary cell group (Secondary Cell Group, SCG). The master cell group may include a primary cell (PCell) and a secondary cell (SCell), and the secondary cell group may include a primary secondary cell (PSCell) and a secondary cell (SCell).

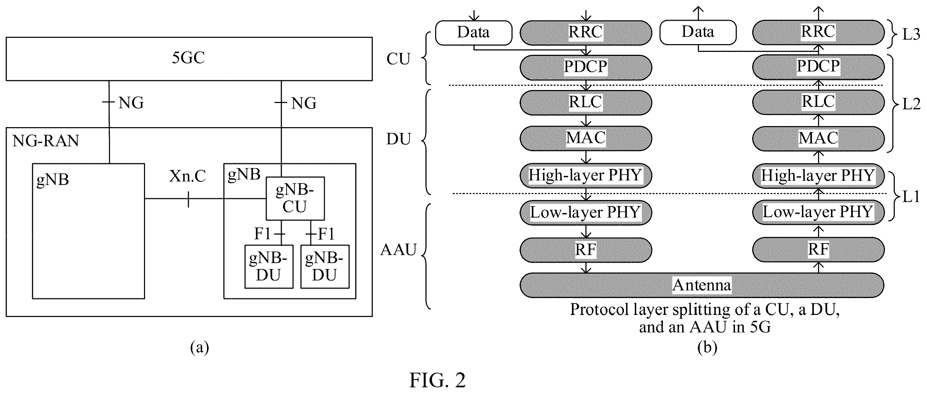

Base station architecture: FIG. 2 is a diagram of an NG-RAN architecture according to an embodiment of this application. As shown in (a) in FIG. 2, a 5G radio access network (Next Generation Radio Access Network, NG-RAN) may be a distributed unit (Distributed Unit, DU)-central unit (Central Unit, CU) split architecture. As shown in (b) in FIG. 2, a DU includes a physical layer (mainly including a high-layer physical layer, that is, a high-PHY), a media access control (Media Access Control, MAC) layer, and a radio link control (Radio Link Control, RLC) layer, and a CU includes a packet data convergence control (Packet Data Convergence Control, PDCP) layer and a radio resource management (Radio Resource Control, RRC) layer. The NG-RAN may further include an active antenna processing unit (Active Antenna Processing Unit, AAU), and the AAU includes a low-layer physical layer (that is, a low-PHY), a radio frequency (Radio Frequency, RF) unit, and an antenna. Based on protocol stack layering, a layer 1 (L1) is a physical layer, a layer 2 (L2) includes a MAC layer, an RLC layer, and a PDCP layer, and a layer 3 (L3) is an RRC layer.

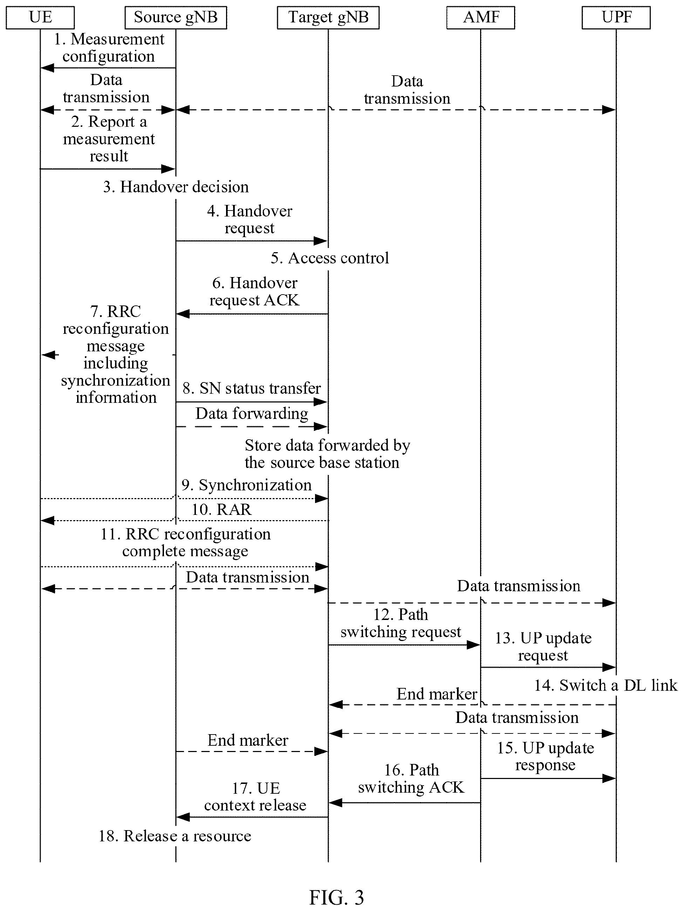

Handover: The handover is completed over the RRC layer. FIG. 3 is a diagram of a handover process according to an embodiment of this application. A specific procedure is shown as follows.
1. A source base station (gNB) performs measurement configuration on UE.
2. The UE reports a measurement result based on the measurement configuration, where the measurement result of the UE is used to assist the source base station in making a handover decision.
3. The source base station makes the handover decision based on a handover algorithm of the source base station by referring to the measurement result reported by the UE.
4. The source base station sends a handover request to a target base station, and transfers necessary related information for handover preparation, where the information includes at least an identifier of a target cell, a key, an ID of the terminal in a source cell, basic access stratum configuration, and the like.
5. The target base station performs access control.
6. The target base station prepares for L1/L2 handover, and sends a handover request acknowledgment (Acknowledgment, ACK) message to the source base station, where a handover command sent to the UE is included in an ACK message in a form of an RRC container (container).
7. The source base station triggers the handover (HandOver, HO), and sends the handover command (HO Command) to the UE. The handover command is generated by the target base station and transparent transmission of the handover command is performed via the source base station (specifically, the handover command may be sent by using an RRC reconfiguration message including synchronization information). The source base station may perform necessary encryption and integrity protection on the message. The handover command includes information needed for accessing the target cell, includes at least the identifier of the target cell, a new ID of the UE, and a security algorithm identifier of the target base station, and may further carry a dedicated random access channel (Random Access Channel, RACH) resource for accessing the target cell, and the like.
8. The source base station sends sequence number status transfer (status transfer) to the target base station.
9. After receiving the handover command, the UE performs synchronization with the target base station, to communicate with the target base station after the handover succeeds.
10. The target base station returns a random access response (Random Access Response, RAR), and performs uplink resource allocation (Uplink grant) and timing advance (Timing Advance, TA).
11. The UE sends an RRC reconfiguration complete message to the target base station, to confirm completion of a handover process to the target base station, where the message may be further sent with an uplink buffer status report (Buffer Status Report, BSR). The target base station confirms, by receiving the RRC reconfiguration complete message, that the handover process succeeds. In this case, the target base station may start to send data to the terminal.
12. The target base station sends a path switching request message to an authentication management function (Authentication Management Function, AMF) to notify the AMF that a cell is changed, trigger a core network (5GC) to switch a downlink (Downlink, DL) data path to the target base station, and establish an NG-C interface to the target base station. In this case, air interface switching has been successfully completed.
13. The AMF sends a user plane (User Plane, UP) update request message to a user plane function (User Plane Function, UPF).
14. The UPF switches the DL data path to the target base station. The UPF sends one or more end markers to the source cell, and then may release an UP resource or a transport network layer resource between remaining source base stations.
15. The UPF sends an UP update response message to the AMF.
16. The AMF sends a path switching ACK message to the target base station.
17. After receiving the path switching ACK message, the target base station sends a UE context release message to the source base station, to notify the source base station that the handover succeeds and trigger the source base station to release a UE context.
18. After receiving the UE context release message, the source base station may release a radio bearer and a control plane (Control Plane, CP) resource related to the UE context. If data forwarding is not completed yet, the source base station does not release a related resource and continues to perform the data forwarding. After the data forwarding is completed, the source base station releases the related resource.

Conditional PSCell addition and change (Conditional PSCell Addition/Change, CPAC) is a conditional PSCell addition (Conditional PSCell Addition, CPA) and conditional PSCell change (Conditional PSCell Change, CPC) process. Both CPA and CPC are addition or change of a primary secondary cell (PSCell) in a DC scenario. A main idea is as follows: A plurality of candidate PSCell cells are configured on a network, and each candidate PSCell cell configuration includes a configuration and an execution condition of the cell. When the execution condition is met, the UE may autonomously perform PSCell addition or change.

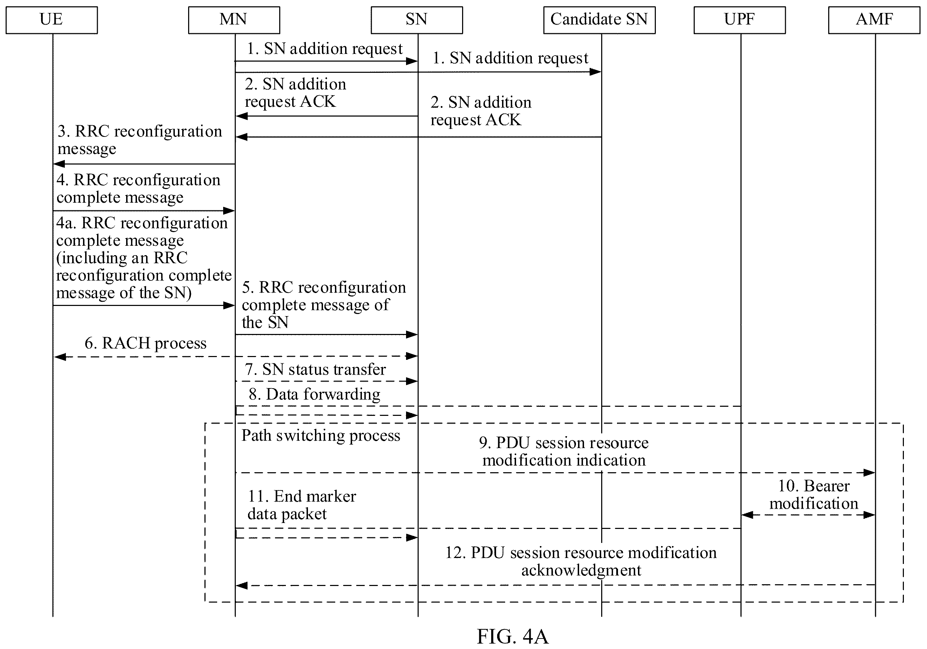

CPA: A CPA process is a process in which PSCell addition is performed when a condition for the PSCell addition is met. FIG. 4A is a flowchart of CPA according to an embodiment of this application. The following uses a procedure of CPA triggered by an MN in an MR-DC scenario as an example.
1. The MN sends a secondary station addition request to an SN in which a candidate cell is located.
2. The SN in which the candidate cell is located sends a secondary station addition request acknowledgment (ACK) to the MN, where the secondary station addition request acknowledgment may include an RRC reconfiguration message a.
3. The MN sends a CPA configuration to UE by using an RRC reconfiguration message (that is, an RRC reconfiguration message A). The RRC reconfiguration message includes the CPA configuration (that is, one or more RRC reconfiguration messages b) and an associated execution condition. Each RRC reconfiguration message b includes one RRC reconfiguration message a from a candidate SN, and optionally includes an MCG configuration.
4. After receiving the RRC reconfiguration message of the MN, the UE returns an RRC reconfiguration complete message to the MN. The UE uses another RRC configuration other than the CPA configuration in the RRC reconfiguration message. In addition, after the UE receives the RRC reconfiguration message of the MN, the UE further performs step 4a:
   4a. The UE starts to evaluate the execution condition. Once an execution condition of a candidate cell is met, the UE uses a configuration that is of a selected candidate cell and that is in the RRC reconfiguration message, and sends an RRC reconfiguration complete message to the MN, where the RRC reconfiguration complete message includes an RRC reconfiguration complete message of the selected candidate cell and information about the selected candidate cell.
5. The MN forwards the RRC reconfiguration complete message of the selected candidate cell to an SN in which the selected candidate cell is located, to notify the SN that a reconfiguration process is successfully completed. The MN may further send an SN release request message to another candidate SN to cancel the CPA.
6. The UE performs a RACH process towards a selected PSCell (the selected candidate cell/the candidate cell that meets the execution condition).
7. The MN sends sequence number status transfer to a target SN.
8. The MN and the target SN perform data forwarding.
9-12. Perform a path switching process.

CPC: A CPC process is a process in which PSCell change is performed when a condition for the PSCell change is met. FIG. 4B-1 and FIG. 4B-2 are a flowchart of CPC according to an embodiment of this application. The following uses a procedure of CPC triggered by an MN in an MR-DC scenario as an example.
1. The MN sends a secondary station addition request to an SN (including a T-SN and a candidate T-SN in the figure) in which a candidate cell is located.
2. The SN in which the candidate cell is located sends a secondary station addition acknowledgment (ACK) to the MN, where the secondary station addition acknowledgment may include an RRC reconfiguration message a.
3. The MN sends a CPC configuration to UE by using an RRC reconfiguration message (that is, an RRC reconfiguration message A). The RRC reconfiguration message includes the CPC configuration (that is, one or more RRC reconfiguration messages b) and an associated execution condition. Each RRC reconfiguration message b includes one RRC reconfiguration message a from a candidate SN, and optionally includes an MCG configuration.
4. After receiving the RRC reconfiguration message of the MN, the UE returns an RRC reconfiguration complete message to the MN. The UE uses another RRC configuration other than the CPC in the RRC reconfiguration message.
4a. The MN notifies, by using an Xn-U address indication (Address Indication), a source SN (S-SN) that the CPC has been triggered.
5. The UE starts to evaluate the execution condition. Once an execution condition of a candidate cell is met, the UE uses a configuration that is of a selected candidate cell and that is in the RRC reconfiguration message, and sends an RRC reconfiguration complete message to the MN, where the RRC reconfiguration complete message includes an RRC reconfiguration complete message of the selected candidate cell and information about the selected candidate cell.
6. The MN notifies the source SN (S-SN) to stop data transmission with the UE.
7. The MN notifies a target SN (T-SN) (an SN in which the selected candidate cell/the candidate cell that meets the execution condition is located) that an RRC reconfiguration process of the target SN is completed, and the MN may further send an SN release request message to another candidate SN to cancel the CPC.
8. The UE executes a RACH process towards the target SN.
9. The source SN sends sequence number status transfer to the target SN via the MN.
10. The MN and the target SN perform data forwarding.
11-17. Perform a path switching process.

The processes in FIG. 4A and FIG. 4B-1 and FIG. 4B-2 are both a CPA or CPC process triggered by the MN. Actually, the CPC may alternatively be triggered by an SN, that is, a source SN sends a secondary station addition request to an MN. When determining that secondary station change can be performed, the MN performs step 1 and a subsequent step. Details are not described herein.

Continuous CPAC: In the foregoing CPA and CPC processes, the UE releases the CPA/CPC configuration after the RACH process between the UE and the target cell is completed. Therefore, the UE cannot use a CPAC configuration until a network is reconfigured or a network is restarted. To reduce an SCG change delay and signaling overheads, after an SCG changes and before the network is reconfigured, execution of the CPAC (subsequent CPAC) is allowed to be continued, that is, the continuous CPAC is performed. FIG. 4C is a diagram of continuous CPAC according to an embodiment of this application. As shown in FIG. 4C, a scenario of the continuous CPAC is described as follows.
1. UE communicates with a master station MN and a cell 3 (C3) served by an SN (where there may be another SCell), where the cell 3 is a current PSCell cell of the UE.
2. A network configures a CPC configuration for the UE, where candidate cells include cells {1, 2, ..., 9}, and the CPC configuration may further include a configuration and an execution condition of each candidate cell.
3. If the UE detects that an execution condition of a cell 5 (C5) is met, the UE changes the PSCell to the cell 5. After completing a connection with the cell 5, the UE does not release the CPC configuration, but continues to maintain the CPC configuration and perform a CPC process.
4. The UE may continue to evaluate another candidate cell. When the another candidate cell meets an execution condition, the UE triggers a PSCell change process. For example, in FIG. 4C, the UE subsequently detects that the cell 3 meets an execution condition. Therefore, the UE then switches the PSCell cell to the cell 3.

L1/L2 handover: The L1/L2 (Layer 1/Layer 2, layer 1 or layer 2) handover is relative to the RRC handover in FIG. 3, and means that a handover process is completed by using a MAC control element (Control Element, CE) or downlink control information (Downlink Control Information, DCI). A gain is to reduce an access delay. Therefore, service interruption and signaling overheads are reduced. FIG. 5A is a diagram of an L1/L2 handover process of inter-DU handover according to an embodiment of this application. As shown in FIG. 5A, the process includes but is not limited to the following steps.
1. A CU delivers a measurement configuration to UE.
2. The UE reports a measurement report to the CU based on the measurement configuration, where the measurement report is used to assist the CU in making a handover decision and determining a candidate cell.
3. The CU sends a handover request or a candidate cell addition request to a candidate DU (including a target DU).
4. The candidate DU (including the target DU) performs handover admission control based on the handover request, and sends an HO request acknowledgment (ACK) to the CU.
5. The CU delivers L1/L2 pre-configuration information to the UE, where the L1/L2 handover pre-configuration information may include a plurality of candidate cells and configuration information of the plurality of candidate cells. The L1/L2 pre-configuration information may be included in an RRC reconfiguration message. After receiving the L1/L2 pre-configuration information, the UE continues to maintain data transmission with a source cell. The UE may perform measurement based on a configuration of a network, so that the network makes a handover decision.
6. A source DU delivers an L1/L2 handover command to the UE, where the L1/L2 handover command indicates the UE to switch to a target cell served by the target DU.
7. The UE performs a RACH process to establish a connection with the target cell. After receiving the L1/L2 handover command, the UE stops data transmission with the source cell.
8. After establishing a connection with the target DU, the UE performs data transmission with the target DU. A subsequent path switching process between the DU and the CU is not described again.

Conditional L1/L2 handover: The conditional L1/L2 handover means that the network delivers an execution condition to a candidate cell for the L1/L2 handover, and when the execution condition is met, the UE triggers the L1/L2 handover. FIG. 5B is a diagram of a conditional L1/L2 handover process of inter-DU handover according to an embodiment of this application. As shown in FIG. 5B, the process includes but is not limited to the following steps.

Step 1 to step 4 are completely the same as step 1 to step 4 in FIG. 5A. Details are not described herein again.
5. The CU delivers L1/L2 pre-configuration information to the UE, where the L1/L2 handover pre-configuration information may include a plurality of candidate cells, configuration information of the plurality of candidate cells, and associated execution conditions. The UE triggers L1/L2 handover only when the UE evaluates that a candidate cell meets an execution condition. The L1/L2 pre-configuration information may be included in an RRC reconfiguration message.
6. The UE stores the L1/L2 pre-configuration information, and starts to evaluate the candidate cell. In this case, the UE continues to perform data transmission with a source DU.
7. When detecting that a candidate cell meets an execution condition, the UE uses the candidate cell as a target cell, and uses a candidate DU in which the target cell is located as the target DU.
8. The UE initiates a RACH process to the target DU, and establishes a connection with the target DU.
9. After establishing the connection with the target DU, the UE performs data transmission with the target DU. A subsequent path switching process between the DU and the CU is not described again.

In addition to the foregoing inter-DU L1/L2 handover (including the conditional L1/L2 handover), there is further inter-DU L1/L2 handover (including inter-DU conditional L1/L2 handover). In other words, a target cell and a source cell of the handover belong to a same DU, and the source DU and the target DU in FIG. 5A and FIG. 5B are respectively replaced with the source cell and the target cell.

It should be noted that the conditional L1/L2 handover is a handover manner of the L1/L2 handover. Therefore, in the following embodiments, an implementation that can be applied to the L1/L2 handover can also be applied to the conditional L1/L2 handover, and vice versa. Details are not described in the following embodiments.

Continuous L1/L2 handover: After L1/L2 handover is completed once, a pre-configuration of a candidate cell may continue to be stored to support the continuous L1/L2 handover. For details, refer to FIG. 5C. FIG. 5C is a diagram of a continuous L1/L2 handover scenario according to an embodiment of this application. As shown in FIG. 5C, a function of a base station is completed by a combination of an independent CU and an independent DU. One CU may be connected to one or more DUs, and each DU establishes a connection with UE via a cell corresponding to the DU.
1. The UE communicates with a cell 3 (C3) served by the DU, where the cell 3 is a current PCell of the UE.
2. A network delivers L1/L2 handover pre-configuration information to the UE, where candidate cells in the pre-configuration information include cells {1, 2, ..., 9}, and the L1/L2 handover pre-configuration information includes a configuration of each candidate cell, and optionally, may further include an execution condition associated with each candidate cell.
3. If the UE detects that an execution condition of a cell 4 (C4) is met, or the UE receives a handover command from the base station to indicate the UE to switch to the cell 4 (C4), the UE changes the PCell cell to the cell 4.

After accessing a target cell once, the UE does not release the L1/L2 handover pre-configuration information, but continues to maintain the L1/L2 handover pre-configuration information.

4a. Optionally, the UE may continue to evaluate another candidate cell. When the another candidate cell meets an execution condition, the UE triggers a PCell change process. For example, in FIG. 5C, the UE subsequently detects that the cell 3 meets an execution condition. Therefore, the UE then switches the PCell cell to the cell 3.

4b. Optionally, the UE then receives a handover command from the base station to indicate the UE to switch to a cell 5 (C5). Therefore, the UE then switches the PCell cell to the cell 5.

It can be learned from the foregoing descriptions that, in a scenario in which continuous cell handover needs to be performed, continuous CPAC, continuous L1/L2 handover and continuous conditional L1/L2 handover, or the like is included, and the following two features are included: (1) The network may need to configure more candidate cells for the terminal device for subsequent handover. (2) After completing cell handover once, the UE does not release configuration information of a related candidate cell, but continues to maintain the configuration information to perform next cell handover. These cases may result in the following result: The UE is assigned a large quantity of candidate cells or needs to maintain a large quantity of candidate cells. In addition, as the UE moves, not all candidate cells are suitable for the UE to execute a cell handover process. In this case, if the UE measures or evaluates all candidate cells to determine a target cell for handover, there are problems of an unclear range of measured cells, low cell handover efficiency, and the like. In addition, additional measurement power consumption may be caused.

Based on this, FIG. 6A is a flowchart of a cell measurement method according to an embodiment of this application. As shown in FIG. 6A, the method includes the following steps.

101. A first network device determines first indication information, where the first indication information indicates at least one candidate cell and a first cell set corresponding to (or associated with) a first candidate cell in the at least one candidate cell, and the first cell set includes at least one cell.

The first network device in this embodiment of this application is an interface device that provides a control plane connection for a terminal device in a cell handover process. For example, in CPAC, the first network device may be a master base station (MN). In L1/L2 handover or conditional L1/L2 handover, the first network device may be a central unit (CU) of the master base station. In some possible cases, assuming that a secondary base station (SN) is also in a structure with an independent CU and an independent DU, the first network device may also be the CU of the SN.

The terminal device (Terminal Equipment) in embodiments of this application may also be referred to as a terminal, user equipment (User Equipment, UE), a mobile station (Mobile Station, MS), a mobile terminal (Mobile Terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (Industrial Control), a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), or the like.

The first network device may first obtain the at least one candidate cell of the terminal device. Specifically, for example, the first network device may determine the candidate cell based on one or more of a network topology, network deployment, an estimated movement direction of the terminal, or statistical information, or may determine the candidate cell of the terminal device with reference to a measurement report (including a layer 1 measurement report or a layer 3 measurement report) reported by the terminal device.

For example, the at least one candidate cell is at least one candidate primary secondary cell for conditional primary secondary cell addition CPA or conditional primary secondary cell change CPC. In other words, this embodiment of this application may be applied to a CPA or CPC process, that is, scenarios corresponding to FIG. 4A to FIG. 4C.

Further, the MN may send an SN addition request to a candidate SN, to determine whether the SN allows to use a cell served by the SN as a candidate cell for addition or change. After receiving an SN addition request ACK sent by the candidate SN, the MN determines to use a determined cell served by the SN as the candidate cell for the addition or change. This is shown in step 1 and step 2 in FIG. 4A to FIG. 4C. The MN includes, in the at least one candidate cell of the first indication information, the determined cell served by the SN. For example, before the MN sends the SN addition request to the candidate SN, the SN may send an SN change request to the MN.

After determining a plurality of candidate cells for the primary secondary cell addition or change, the MN may further determine a first cell set corresponding to any first candidate cell in the plurality of candidate cells.

For example, the MN may determine, based on one or more of the network topology, the network deployment, the estimated movement direction of the terminal, or the statistical information, the first cell set corresponding to the first candidate cell, or may determine, with reference to the measurement report reported by the terminal device, the first cell set corresponding to the first candidate cell.

In some cases, the SN addition request sent by the MN to the candidate SN (for example, a first candidate SN) may include a candidate SN list. After receiving the SN addition request, the first candidate SN may further send a request message to another candidate SN, to request to determine whether the another candidate SN agrees to include a cell of the another candidate SN in a first cell set corresponding to a cell served by the first candidate SN. If the another candidate SN agrees to include the cell of the another candidate SN in the first cell set corresponding to the cell served by the first candidate SN, an SN addition request ACK (or another message) sent by the first candidate SN to the MN may further include the first candidate SN or a first cell set associated with a candidate cell served by the first candidate SN. The MN may determine, based on first cell sets sent by a plurality of candidate SNs, the first cell set corresponding to any first candidate cell in the plurality of candidate cells.

For example, the at least one candidate cell is at least one candidate primary cell for L1/L2 handover or conditional L1/L2 handover. In other words, this embodiment of this application may alternatively be applied to an L1/L2 handover process or a conditional L1/L2 handover process, that is, scenarios corresponding to FIG. 5A to FIG. 5C.

Further, the CU may send a request message to a candidate DU, to determine whether the candidate DU allows to use a cell served by the candidate DU as a candidate cell for the handover. After receiving a request ACK sent by the candidate DU, the CU determines to use a determined cell served by the DU as the candidate cell for the handover. This is shown in step 3 and step 4 in FIG. 5A to FIG. 5C. The CU includes, in the at least one candidate cell of the first indication information, the determined cell served by the DU.

After determining a plurality of candidate cells for the L1/L2 handover, the CU may further determine a first cell set corresponding to any first candidate cell in the plurality of candidate cells.

For example, the CU may determine, based on one or more of the network topology, the network deployment, the estimated movement direction of the terminal, information from the DU, or the statistical information, the first cell set corresponding to the first candidate cell, or may determine, with reference to the measurement report reported by the terminal device, the first cell set corresponding to the first candidate cell.

The at least one cell in the first cell set is a cell measured or evaluated by the terminal device when the first candidate cell is used as a serving cell (a serving PSCell or a serving PCell) of the terminal device. When the serving cell of the terminal device is the first candidate cell, the terminal device only needs to measure a cell in the first cell set, or the terminal device only needs to evaluate whether a cell in the first cell set meets an execution condition. For details, refer to Table 1 as follows:

**Table 1**

| Plurality of candidate cells | First candidate cell | First cell set |
|---|---|---|
| Cells {1, 2, 3, ..., 7, 8, 9} | Cell 3 | Cells {1, 2, 4, 5, 8} |
| | Cell 5 | Cells {3, 4, 6, 9} |
| | Cell 4 | Cells {3, 5, 11} |
| | ... | ... |

It should be noted that Table 1 shows only first cell sets corresponding to some candidate cells in the plurality of candidate cells when the some candidate cells are used as first candidate cells. However, it may be inferred that the first indication information may indicate first cell sets corresponding to some or all candidate cells when the some or all candidate cells are used as first candidate cells. Table 1 imposes no limitation thereto.

For example, the first cell set includes one or more cells other than the first candidate cell in the at least one candidate cell, or the cell in the first cell set belongs to the at least one candidate cell. As shown in Table 1, when the first candidate cell is a cell 3, a first cell set corresponding to the cell 3 includes a cell 1, a cell 2, a cell 4, a cell 5, and a cell 8. These cells are all cells in candidate cells configured by the first network device for the terminal device. The cell in the first cell set associated with the first candidate cell may be a candidate cell that can be detected or that has good signal quality when the terminal device is located in a coverage range of the first candidate cell. When the serving cell of the terminal device is the first candidate cell, the terminal device may measure or evaluate only some candidate cells based on the first cell set, to reduce power overheads.

For example, the cell in the first cell set may include a cell other than the at least one candidate cell. As shown in Table 1, when the first candidate cell is a cell 4, a first cell set corresponding to the cell 4 includes a cell 3, a cell 5, and a cell 11. The cell 11 does not belong to one of the at least one candidate cell configured for the terminal device, but the cell 11 is adjacent to the cell 4. When the cell 4 is used as the serving cell of the terminal device, the cell 11 may meet a handover requirement of the terminal device. Therefore, the first network device may indicate the cell 11 as a cell in the first cell set of the cell 4. The cell in the first cell set associated with the first candidate cell may be a cell that can be detected or that has good signal quality when the terminal device is located in a coverage range of the first candidate cell. When the serving cell of the terminal device is the first candidate cell, the terminal device may measure, based on the first cell set, another neighboring cell with good signal quality near the first candidate cell, to prevent the terminal device from missing a high-quality neighboring cell, and ensure quality of a target cell to which the terminal device switches.

For example, that the first indication information indicates the first cell set corresponding to the first candidate cell in the at least one candidate cell includes: The first indication information may indicate the first cell set by indicating a physical cell identifier PCI (Physical Cell Identifier, PCI) of the at least one cell. For example, a network indicates the first cell set in a form of a PCI list.

Alternatively, the first indication information may indicate the first cell set by indicating a configuration identifier of a cell. For example, the first network device includes a configuration identifier (Config ID) in pre-configuration information, and the configuration identifier is associated with a configuration of a candidate cell. For example, the configuration identifier may be further associated with an execution condition of the candidate cell. When the candidate cell meets the execution condition, the terminal device may perform candidate cell addition or handover. The pre-configuration information may be the CPA configuration in FIG. 4A, the CPC configuration in FIG. 4B-1 and FIG. 4B-2, or the L1/L2 pre-configuration information in FIG. 5A and FIG. 5B. The network may indicate the first cell set in a form of a configuration identifier list.

Alternatively, the first indication information may indicate, by using bit mapping indication information, the first cell set corresponding to the first candidate cell. For example, a bit corresponding to a candidate cell indicates the first cell set. In this case, the cell in the first cell set belongs to a plurality of candidate cells configured by a network side for the terminal device. For details, refer to FIG. 6B. FIG. 6B is a diagram of a correspondence between a bitmap and a candidate cell according to an embodiment of this application. As shown in FIG. 6B, candidate cells are a cell 1 to a cell 9 (C1 to C9), which respectively correspond to nine bits in the bitmap. A bitmap corresponding to the cell 2 is 001110011. It indicates that a first cell set corresponding to the cell 2 includes cells {3, 4, 5, 8, 9}. Alternatively, a bit corresponding to a maximum quantity of candidate cells that can be configured by a network side for the terminal device indicates the cell in the first cell set. For example, the maximum quantity of candidate cells that can be configured for the terminal device is 16, and the candidate cells correspond to a cell 1 to a cell 16. Assuming that first indication information of the cell 3 is 1101 0011 1000 0000, and bit indicators corresponding to the cell 1, the cell 2, the cell 3, the cell 7, the cell 8, and the cell 9 are "1." It indicates that these cells are cells in a first cell set of the cell 3. For other cells whose bit indicators are "0", it indicates that these cells are not cells in the first cell set of the cell 3.

Alternatively, the first indication information may indicate the cell in the first cell set in another manner. The foregoing implementations are merely some examples, and should not constitute a specific limitation on an indication manner of the first indication information.

It should be noted that in step 101, the following is described: The first indication information indicates the at least one candidate cell and the first cell set corresponding to the first candidate cell in the at least one candidate cell. It should be specified that the at least one candidate cell and the first cell set corresponding to the first candidate cell may be indicated in a same message by using the first indication information, or may be indicated in different messages.

A CPAC scenario is used as an example. The at least one candidate cell (candidate primary secondary cell) may be indicated in a first RRC reconfiguration message sent by the MN to the terminal device. When the MN sends the first RRC reconfiguration message to the terminal device, an RRC reconfiguration message of the SN, that is, CPAC configuration information is included. Correspondingly, the candidate primary secondary cell may be updated. Therefore, the at least one candidate primary secondary cell of the terminal device may alternatively be indicated in the CPAC configuration information, so that the terminal device performs SN handover. In other words, the first indication information may be sent in the first RRC reconfiguration message, and indicates both the at least one candidate primary secondary cell and the first cell set corresponding to the first candidate cell. Alternatively, the first indication information may be separately sent in the first RRC reconfiguration message and a second RRC reconfiguration message (including the CPAC configuration information, where the first indication information may be carried in the CPAC configuration information). The first RRC reconfiguration message indicates the at least one candidate primary secondary cell, and the second RRC reconfiguration message indicates the first cell set corresponding to the first candidate cell.

Alternatively, an L1/L2 handover scenario is used as an example. The at least one candidate cell (candidate primary cell) may be indicated in a third RRC reconfiguration message delivered by the CU to the terminal device. Alternatively, the CU may update the candidate primary cell based on a measurement report periodically reported by the terminal device. Therefore, when delivering the L1/L2 pre-configuration information to the EU by using a third RRC reconfiguration message, the CU may indicate the at least one candidate primary cell corresponding to the candidate DU, so that the terminal device performs DU handover. In other words, the first indication information may be sent in the third RRC reconfiguration message, and indicates both the at least one candidate primary cell and the first cell set corresponding to the first candidate cell. Alternatively, the first indication information may be separately sent in a third RRC reconfiguration message and a fourth RRC reconfiguration message (including the L1/L2 pre-configuration information, where the first indication information may be carried in the L1/L2 configuration information). The third RRC reconfiguration message indicates the at least one candidate primary cell, and the fourth RRC reconfiguration message indicates the first cell set corresponding to the first candidate cell.

In the foregoing descriptions, the first indication information sent in a same message indicates both the at least one candidate cell and the first cell set corresponding to the first candidate cell, so that the candidate cell and the first cell set of the first candidate cell can be indicated at one time. This helps the terminal device ensure consistency and integrity between the plurality of candidate cells and the first candidate cell. The first indication information sent in different messages separately indicates the at least one candidate cell and the first cell set corresponding to the first candidate cell. In addition, usually, the at least one candidate cell is first indicated, and then the first cell set corresponding to the first candidate cell is indicated. In this way, a delay in obtaining the at least one candidate cell by the terminal device can be reduced, so that the terminal device performs other processing (including candidate cell measurement and the like) based on the obtained at least one candidate cell. The first network device may indicate the first candidate cell and the first cell set in real time based on an updated location of the terminal device. This improves accuracy and real-time performance of indication of the information, avoids sending of unnecessary indication content, and reduces communication overheads.

102. The first network device sends the first indication information. For example, the first indication information may be included in pre-configuration information, and the pre-configuration information may be the CPA configuration in FIG. 4A, the CPC configuration in FIG. 4B-1 and FIG. 4B-2, or the L1/L2 pre-configuration information in FIG. 5A and FIG. 5B. In other words, the first network device may send the first indication information by using step 3 in FIG. 4A to FIG. 4C or step 5 in FIG. 5A to FIG. 5C.

103. The terminal device receives the first indication information, and the terminal device measures or evaluates the cell in the first cell set based on the first indication information, where the serving cell of the terminal device is the first candidate cell. In other words, the first indication information indicates a cell measured (or evaluated) by the terminal device when the serving cell of the terminal device is the first candidate cell.

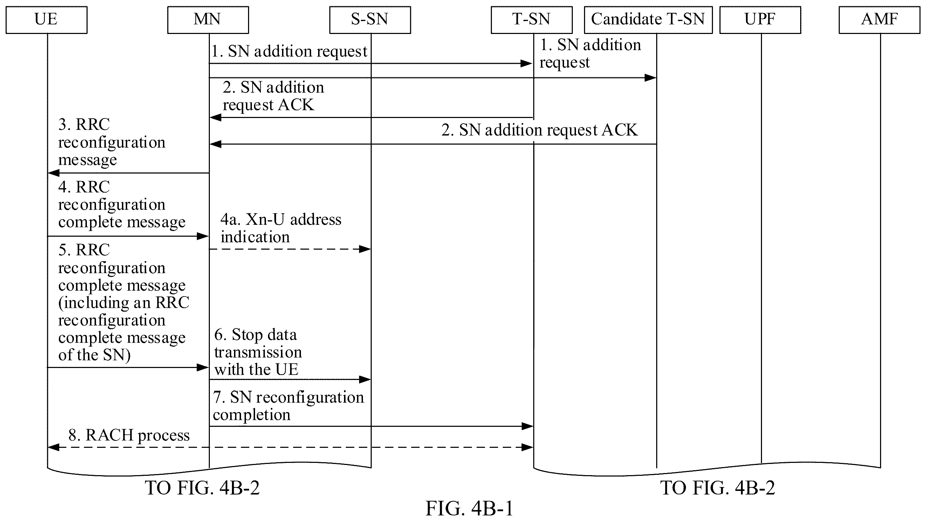

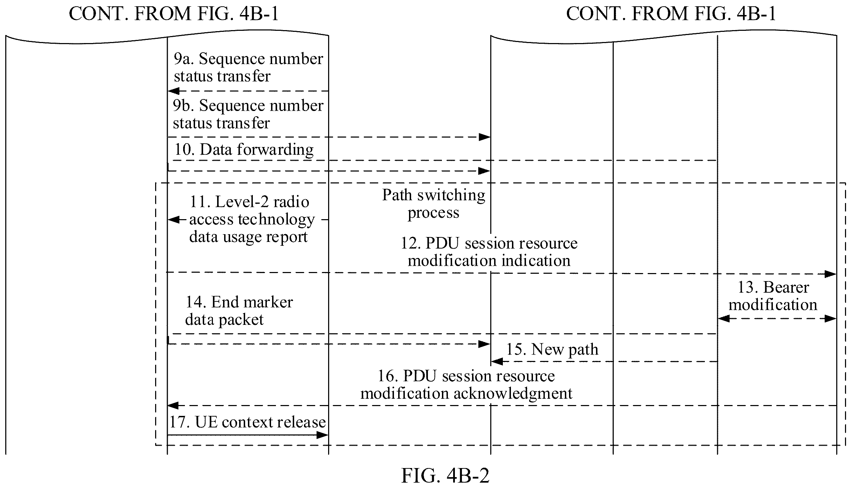

After determining the first indication information, the first network device sends the first indication information to the terminal device. The terminal device receives the first indication information, and executes a cell measurement or evaluation process based on the first indication information. For example, that the terminal device performs cell measurement based on the first indication information may correspond to step 5 in FIG. 5A. For another example, that the terminal device performs cell evaluation based on the first indication information may correspond to step 4a in FIG. 4A, step 5 in FIG. 4B-1, or step 6 in FIG. 5B.

For example, in a CPC scenario, the first candidate cell is the serving cell of the terminal device. It indicates that the first candidate cell is a primary secondary serving cell of the terminal device. If the serving cell is the first candidate cell, the terminal device evaluates, based on the first indication information, whether the cell in the first cell set meets the execution condition. The execution condition may be included in a message in which the first indication information is located. The terminal device receives the first indication information shown in Table 1. When the primary secondary serving cell of the terminal device is the cell 5, the terminal device measures and evaluates cells in the cells {3, 4, 6, 9} in the first cell set, to determine whether a cell that meets the execution condition exists in these cells. If the cell that meets the execution condition exists in these cells, the primary secondary serving cell is switched, or the SN is switched.

For example, in an L1/L2 handover scenario, the first candidate cell is the serving cell of the terminal device. It indicates that the first candidate cell is a primary serving cell of the terminal device (or may be a primary secondary serving cell of the terminal device in some cases). If the serving cell is the first candidate cell, the terminal device measures the cell in the first cell set based on the first indication information. Alternatively, if the serving cell is the first candidate cell, the terminal device evaluates, based on the first indication information, whether the cell in the first cell set meets the execution condition. The terminal device receives the first indication information shown in Table 1. When the primary serving cell (or the primary secondary serving cell) of the terminal device is the cell 5, the terminal device measures or evaluates cells in the cells {3, 4, 6, 9} in the first cell set. If the terminal device evaluates the cell in the first cell set, the terminal device determines whether a cell that meets the execution condition exists in these cells. If the cell that meets the execution condition exists in these cells, the primary serving cell (or the primary secondary serving cell) is switched.

It should be noted that, that the terminal device measures or evaluates the cell in the first cell set does not mean that the terminal device can definitely detect all cells in the first cell set, and the terminal device only attempts to measure the cell in the first cell set. For example, when the serving cell of the terminal device is the first candidate cell, another cell outside the first cell set does not need to be measured or evaluated.

It may be learned that, in this embodiment of this application, the first network device obtains the first indication information, where the first indication information indicates the at least one candidate cell and the first cell set corresponding to the first candidate cell in the at least one candidate cell. The terminal device receives the first indication information, and performs cell measurement based on the first cell set indicated by the first indication information. In this process, a first cell set corresponding to each first candidate cell is determined. Assuming that cells in the first cell set are some of candidate cells, cells that need to be measured or evaluated when the terminal device performs cell handover can be reduced, thereby improving handover efficiency and reducing power of the terminal device. In addition, assuming that the cells in the first cell set include a cell other than the candidate cell, a cell measured and evaluated by the terminal device can be not limited to the at least one candidate cell configured for the terminal device. This improves a success rate of cell handover of the terminal device. In conclusion, in this embodiment of this application, the cell measured and evaluated by the terminal device is associated with the serving cell, so that a range of measured and evaluated cells changes with the serving cell. This improves efficiency of cell measurement and evaluation, and further improves efficiency of a cell handover process.

The foregoing embodiment is used to describe a case in which a candidate cell that needs to be measured and evaluated by the terminal device may change accordingly when the terminal device moves. However, in some other cases, as a location of the terminal device moves, related configuration performed by the network side for the terminal device may no longer be valid. Specifically, refer to FIG. 7A. FIG. 7A is a flowchart of a communication method according to an embodiment of this application. As shown in FIG. 7A, the method includes the following steps.

201. A first network device determines configuration information of a candidate cell.

Same as the foregoing embodiment, the first network device is an interface device that provides a control plane connection for a terminal device in cell handover communication. For example, in CPAC, the first network device may be an MN. In L1/L2 handover or conditional L1/L2 handover, the first network device may be a CU of a master base station. In some possible cases, the first network device may alternatively be a CU of an SN.

The first network device may determine the configuration information of the candidate cell, for example, an identifier of the candidate cell, an access condition of the candidate cell, and a measurement configuration corresponding to the candidate cell. The first network device may determine the configuration information of the candidate cell based on a network topology, network deployment, and a cell parameter, for example, information such as a frequency band on which the cell is located.

202. The first network device sends a first message to the terminal device, where the first message includes the configuration information of the candidate cell.

After determining the configuration information of the candidate cell, the first network device sends the configuration information of the candidate cell to the terminal device by using the first message, so that the terminal device measures or evaluates the candidate cell. The configuration information of the candidate cell may be specifically included in the CPA configuration in FIG. 4A, the CPC configuration in FIG. 4B-1 and FIG. 4B-2, or the L1/L2 pre-configuration information in FIG. 5A and FIG. 5B.

203. The terminal device receives the first message, and when a first condition is met, the terminal device sends a second message to the first network device, where the second message is used to request to update the configuration information of the candidate cell. The first condition is a condition that signal quality of a serving cell or the candidate cell needs to meet. For example, the first condition includes at least one of the following: signal quality of the serving cell is less than or equal to a first threshold; a quantity of candidate cells that can be detected is less than or equal to a first quantity; or signal quality of the candidate cell is less than or equal to a second threshold.

In some cases, for a location change caused by movement of the terminal device, refer to FIG. 7B for details. FIG. 7B is a diagram of location movement of a terminal device according to an embodiment of this application. As shown in FIG. 7B, when the terminal device is at a location 1, the first network device delivers the configuration information of the candidate cell to the terminal device based on a current serving cell C3 of the terminal device, where candidate cells include C {1, 2, 4, ..., 8}. When the terminal device moves to a location 2, the configuration information of the candidate cell is still applicable. However, when the terminal device moves to a location 3, some long-distance candidate cells, for example, cells {2, 5, 7}, are no longer cells that can be measured by the terminal device, and these cells are no longer used as candidate cells of the terminal device. Correspondingly, the terminal device may have a new candidate cell, for example, a cell 9. In this case, the configuration information that is of the candidate cell and that is previously received by the terminal device is no longer applicable. However, the first network device may not be able to update the configuration information of the candidate cell in time. Consequently, the terminal device may fail to perform cell handover or communication quality may be poor.

Based on this, the terminal device may trigger sending of the second message to the first network device, to request to update the configuration information of the candidate cell or request to update the candidate cell. A specific trigger condition includes the first condition, and the first condition may specifically include one or more of the following:
(1) The signal quality of the serving cell is less than or equal to the first threshold. For example, in FIG. 7B, when the serving cell of the terminal device is the C3, the configuration information of the candidate cell is received. When the terminal device moves to the location 3, signal quality of the serving cell C3 deteriorates. When the signal quality of the serving cell C3 is less than or equal to the first threshold, the terminal device may be triggered to send the second message to the first network device. The signal quality of the cell may be represented by parameters such as a reference signal received power (Reference Signal Received Power, RSRP), a carrier received signal strength (Received Signal Strength Indication, RSSI), and reference signal received quality (Reference Signal Received Quality, RSRQ). The first threshold is, for example, a threshold of the RSRP, and is specifically -110 dBm (decibel-milliwatt). The first threshold is configured by a network or predefined. For example, the first threshold is included in the first message.
(2) The quantity of candidate cells that can be detected by the terminal device is less than or equal to the first quantity. For example, in FIG. 7B, because the configuration information of the candidate cell is delivered by the first network device based on the current serving cell C3, the terminal device can detect a large quantity of candidate cells at the location 1. However, when the terminal device moves to the location 2 and further moves to the location 3, because the terminal device is farther away from a signal coverage range of the candidate cell, the quantity of candidate cells that can be detected by the terminal device is smaller. Therefore, when the quantity of candidate cells that can be detected by the terminal device is less than or equal to the first quantity, the terminal device may be triggered to send the second message to the first network device. The first quantity is configured by the network or predefined. For example, the first quantity is included in the first message.
(3) The signal quality of the candidate cell is less than or equal to the second threshold. This may mean that signal quality of all candidate cells configured by the first network device for the terminal device is less than or equal to the second threshold, or may mean that signal quality of a third quantity of candidate cells in the candidate cells is less than or equal to the second threshold. The second threshold and the third quantity may be configured by the network or predefined. For example, the second threshold and/or the third quantity are/is included in the first message. In this case, it indicates that quality of all candidate cells or a large quantity of candidate cells is poor, and the terminal device cannot perform effective cell handover. In this case, the terminal device may be triggered to send the second message to the first network device.

The foregoing three conditions may be separately used to trigger the terminal device to send the second message, or may be used in combination to trigger the terminal device to send the second message. For example, when the signal quality of the serving cell is less than or equal to the first threshold and the quantity of candidate cells that can be detected by the terminal device is less than or equal to the first quantity, the terminal device is triggered to send the second message.

Optionally, the second message may include an identifier of a candidate cell that the terminal device suggests to delete or add. Alternatively, the second message may include signal quality of some candidate cells.

For example, the configuration information of the candidate cell is conditional primary secondary cell addition CPA or conditional primary secondary cell change CPC configuration information, and the second message is used to update the CPA or CPC configuration information. For example, the second message is used to request the network to add or reduce a candidate cell.

In other words, this embodiment of this application may be applied to the CPA or CPC process shown in FIG. 4A to FIG. 4C. The first network device sends configuration information of a candidate primary secondary cell to the terminal device by using CPAC configuration information (that is, the CPA configuration information or the CPC configuration information). After receiving the configuration information, the terminal device performs corresponding cell measurement and evaluation, to perform primary secondary cell handover. When one or more of the foregoing three conditions are met, the terminal device is triggered to send the second message to the first network device, to update the CPAC configuration information. After receiving the second message, the first network device may re-determine the CPAC configuration information, for example, re-determine new CPAC configuration information based on information such as the second message, the network topology, the network deployment, current location information of the terminal device, and whether a cell that is of the SN and that is re-reported by the SN can be used as a candidate cell.

For example, the configuration information of the candidate cell is configuration information of a candidate cell for layer 1/layer 2 handover, and the first message is used to request to update the layer 1/layer 2 handover configuration information. For example, the first message is used to request the network to add or reduce a candidate cell.

In other words, this embodiment of this application may be applied to the L1/L2 handover process shown in FIG. 5A to FIG. 5C. The first network device sends configuration information of a candidate primary cell (or a candidate primary secondary cell) to the terminal device by using L1/L2 pre-configuration information. After receiving the configuration information, the terminal device performs corresponding cell measurement or evaluation, to perform cell handover. When one or more of the foregoing three conditions are met, the terminal device is triggered to send the second message to the first network device, to update the L1/L2 pre-configuration information. After receiving the second message, the first network device may re-determine the L1/L2 configuration information, for example, re-determine new L1/L2 configuration information based on information such as the second message, the network topology, the network deployment, current location information of the terminal device, and a measurement report reported by the terminal device.

Before receiving updated configuration information that is of the candidate cell and that is delivered by the network, the terminal device continues to use or maintain the original configuration information of the candidate cell.

It may be learned that, in this embodiment of this application, when the first condition is met, the terminal device may be triggered to send the second message to the first network device, to request to update the configuration information of the candidate cell. In this way, the terminal device actively requests the network device to update the configuration information of the candidate cell, so that the terminal device can obtain most accurate configuration information of the candidate cell in time, to perform cell handover. This increases a probability of successful cell handover and reduces a cell handover delay caused by a failure in obtaining valid configuration information of the candidate cell in time.

It should be noted that this embodiment of this application may be implemented separately, or may be implemented in combination with the foregoing embodiment corresponding to FIG. 6A and FIG. 6B. In other words, both the first indication information and the configuration information of the candidate cell are sent to the terminal device, and the terminal device performs measurement or evaluation based on the first indication information. When the first condition is met, the terminal device sends the second message, to request to update the configuration information of the candidate cell, and also to request to update content of the first indication information. The at least one candidate cell corresponding to the terminal device and the first cell set corresponding to the first candidate cell in the at least one candidate cell are updated accordingly with an update of the configuration information of the candidate cell. In this way, when obtaining configuration information of a candidate cell corresponding to a current location in time, the terminal device can also obtain a first cell set corresponding to the candidate cell. In this way, the terminal device can perform more accurate and quick cell measurement and evaluation, to further improve a cell handover success rate.

In some cases, as a location of the terminal device moves, related configuration performed by a network side for the terminal device is no longer valid. In addition to requesting the update of the configuration information of the candidate cell described in the embodiment corresponding to FIG. 7A and FIG. 7B, further, the terminal device may actively send the measurement report to the network device. Specifically, refer to FIG. 8. FIG. 8 is a flowchart of a communication method according to an embodiment of this application. As shown in FIG. 8, the method includes the following steps.

301. A first network device determines configuration information of a candidate cell.

302. The first network device sends a first message, where the first message includes the configuration information of the candidate cell.

For details of descriptions of step 301 and step 302, refer to the descriptions of step 201 and step 202. Details are not described herein again.

303. A terminal device receives the first message, and when a second condition is met, triggers sending of a measurement report to the first network device, where the measurement report includes signal quality of the candidate cell. The second condition is a condition that signal quality of a serving cell or the candidate cell needs to meet. For example, the second condition includes at least one of the following: signal quality of the serving cell is less than or equal to a second threshold; a quantity of candidate cells that can be detected by the terminal device is less than or equal to a second quantity; the signal quality of the candidate cell is less than or equal to a third threshold; the serving cell is switched to a first cell, where the first cell is a cell in a second cell set; or signal quality of one or more cells other than the candidate cell is greater than or equal to a fourth threshold.

Similarly, as described in the embodiment in FIG. 7A and FIG. 7B, assuming that a location of the terminal device changes, the configuration information of the candidate cell sent by the first network device may no longer be applicable. In this case, the terminal device may send the measurement report to the first network device. The measurement report includes signal quality of some or all candidate cells, and may further include signal quality of a cell other than the candidate cell. In this case, the first network device may update the configuration information of the candidate cell based on the measurement report. Specifically, for example, an execution condition of the candidate cell is updated, or the candidate cell is updated.

The second condition for triggering the terminal device to send the measurement report may include one or more of the following:
(1) The signal quality of the serving cell is less than or equal to the second threshold.
(2) The quantity of candidate cells that can be detected is less than or equal to the second quantity.
(3) The signal quality of the candidate cell is less than or equal to the third threshold.
   For specific descriptions of the condition (1) to the condition (3), refer to related descriptions in the embodiment in FIG. 7A and FIG. 7B. A difference lies only in that the condition (1) to the condition (3) in FIG. 7A and FIG. 7B are used to trigger the terminal device to send the second message to the first network device. The condition (1) to the condition (3) in this embodiment of this application are used to trigger the terminal device to send the measurement report to the first network device.
(4) The serving cell is switched to the first cell, where the first cell is a cell in the second cell set. In other words, the terminal device switches to the first cell in the preset second cell set. A cell in the second cell set is the candidate cell. For example, cells in the second cell set are C {8, 9} in FIG. 7B. The cell in the second cell set may alternatively be a cell other than the candidate cell, for example, when a network indicates the terminal device to switch to the cell other than the candidate cell. The serving cell is switched to the first cell. This may represent that the terminal device has moved to a location at which the signal quality of the candidate cell is poor, and the terminal device may be triggered to send the measurement report to the first network device, so that a reference for a decision, for example, a decision on whether to update and how to update the configuration information of the candidate cell, is provided for the first network device. The first cell or the second cell set may be configured by the network, for example, included in the first message.
(5) The signal quality of the one or more cells other than the candidate cell is greater than or equal to the fourth threshold. The terminal device learns, through measurement, that signal quality of one cell other than the candidate cell or signal quality of a fourth quantity of cells is greater than or equal to the fourth threshold, where the fourth quantity and the fourth threshold may be configured by the network or predefined, for example, included in the first message. In this case, the terminal device may trigger the sending of the measurement report to the first network device, so that the terminal device determines whether to update the configuration information of the candidate cell, where updating the configuration information of the candidate cell includes adding the one or more cells as candidate cells of the terminal device, or the like.

The condition (1) to the condition (5) may be separately used to trigger the terminal device to send the measurement report to the first network device, or may be used in combination to trigger the terminal device to send the measurement report to the first network device. For example, when the condition (1), the condition (3), and the condition (5) are all met, it indicates that signal quality of a current serving cell of the terminal device is poor, and signal quality of all candidate cells is poor, but signal quality of another cell is good. In this case, the terminal device may be triggered to send the measurement report to the first network device. The measurement report is used by the first network device as a reference to make a decision on whether to update and how to update the configuration information of the candidate cell.

It may be learned that, in this embodiment of this application, when the second condition is met, the terminal device may be triggered to send the measurement report to the first network device. The measurement report is used by the first network device as a reference for how to update the configuration information of the candidate cell. In this way, the terminal device actively sends the measurement report to the network device, so that the network device can more quickly and accurately determine a solution of updating the configuration information of the candidate cell. Further, a success rate of a cell handover process is increased.

It should be noted that this embodiment of this application may be implemented separately, or may be implemented in combination with the embodiment described in FIG. 7A and FIG. 7B. Specifically, assuming that after receiving the configuration information of the candidate cell, the terminal device determines that the terminal device meets one or more of the condition (1) to the condition (3) in FIG. 7A and FIG. 7B, and also meets one or more of the condition (1) to the condition (5) in this embodiment of this application (where the condition (1) to the condition (3) in FIG. 7A and FIG. 7B and the condition (1) to the condition (3) in this embodiment of this application may be conditions corresponding to a same threshold or a same quantity, or may be conditions corresponding to different thresholds or different quantities), the terminal device is triggered to send the second message and the measurement report to the first network device, to request to update the configuration information of the candidate cell. In addition, the terminal device may send the measurement report to the network device, so that the network device determines, based on the measurement report, how to specifically update the configuration information of the candidate cell.

It may be learned that the embodiment corresponding to FIG. 7A and FIG. 7B are combined with the embodiment corresponding to FIG. 8, so that efficiency and accuracy of updating the configuration information of the candidate cell by the network device can be further improved, and efficiency and a success rate of performing cell handover by the terminal device based on new configuration information of the candidate cell can be further improved.

Similarly, the embodiment corresponding to FIG. 8 may be combined with the embodiment corresponding to FIG. 6A and FIG. 6B. A specific combination manner may be: The terminal device is triggered to send the measurement report to the first network device, and the first network device determines the first indication information based on the measurement report. Alternatively, the embodiment corresponding to FIG. 6A and FIG. 6B, the embodiment corresponding to FIG. 7A and FIG. 7B, and the embodiment corresponding to FIG. 8 may be combined. A specific combination manner is described above. Details are not described herein again.

In some cases, for the received configuration information of the candidate cell (for details of a process in which the terminal device obtains the configuration information of the candidate cell, refer to step 201 and step 202 in the foregoing embodiment), the terminal device may invalidate or release the configuration information of the candidate cell in addition to validating or storing the configuration information of the candidate cell. For details, refer to FIG. 9. FIG. 9 is a flowchart of a communication method according to an embodiment of this application. The method includes the following steps.

401. A first network device sends a third message to a terminal device, where the third message indicates the terminal device to switch to a target cell, and the target cell does not belong to a candidate cell. The third message is, for example, an RRC reconfiguration message or a handover command.

402A. The terminal device receives the third message sent by the first network device, and the terminal device switches to the target cell indicated by the third message, and considers configuration information of the candidate cell valid or stored.

402B. The terminal device switches to the target cell indicated by the third message, and determines, based on indication information A from the first network device, that the configuration information of the candidate cell is valid or invalid.

Step 402A and step 402B are optional steps.

For example, the indication information A may be included in the third message.

For example, before step 401, step 400 is further included: The first network device sends the indication information A to the terminal device.

Meanings of the first network device and the terminal device in this embodiment of this application are the same as those in the foregoing embodiment. Details are not described herein again. In some cases, the terminal device may receive indication information sent by the first network device, to indicate the terminal device to switch from a current serving cell (a source cell) to the target cell. For example, in CPAC, a serving cell may be a PSCell. In L1/L2 handover, a serving cell may be a PCell. When detecting that a cell meets a handover condition, the first network device may use the cell as the target cell, and indicate the target cell to the terminal device by using the third message.

If the target cell belongs to the candidate cell, and the configuration information of the candidate cell has been sent by the first network device to the terminal device. In this case, the terminal device may complete access to the target cell based on the configuration information of the candidate cell. In this case, the configuration information that is of the candidate cell and that is previously received by the terminal device is still considered valid. Therefore, the configuration information may be stored, maintained, or the like.

If the target cell does not belong to the candidate cell, in this case, the terminal device cannot access the target cell based on the previously received configuration information of the candidate cell, and may complete the access based on configuration information newly sent by the first network device, for example, complete handover by using a configuration in the third message. If the target cell does not belong to the candidate cell, it indicates that a location of the terminal device may move or a signal of a cell or the like may change, and the previous configuration information of the candidate cell is no longer applicable to cell handover of the terminal device. In this case, operations that may be performed by the terminal device include the following: (1) Consider the configuration information of the candidate cell valid or stored. In this case, the terminal device may consider that although current configuration information of the candidate cell does not adapt to the target cell, configuration information that is of the candidate cell and that is re-determined after the location of the terminal device continues to move or a candidate cell parameter continues to change adapts to the target cell. Therefore, the configuration information of the candidate cell is still considered valid or stored. In this way, a probability of resending the same configuration information of the candidate cell by the first network device to the terminal device can be reduced, thereby reducing signaling overheads and reducing a delay. (2) Determine, based on the indication information from the first network device, that the configuration information of the candidate cell is valid or invalid. For example, first indication information is included in the third message or a message in which a configuration of the candidate cell is located. A network device (for example, a CU) may determine, based on the target cell, a network topology, and the like, whether the terminal device can still use the configuration information of the candidate cell after handover. The first network device may explicitly indicate, by using the indication information, whether the previously sent configuration information of the candidate cell is valid. In this case, the terminal device may determine, based on the indication information of the first network device, that the configuration information of the candidate cell is valid or invalid, further store valid configuration information of the candidate cell, and may release invalid configuration information of the candidate cell.

It may be learned that, in this embodiment of this application, when a specific condition is met, specifically for example, when the target cell indicated by the network device is a cell other than the candidate cell, in comparison with a general consideration that the terminal device releases the received configuration information of the candidate cell after performing cell handover, it may be determined that the configuration information of the candidate cell is valid. In this way, signaling overheads of the configuration information of the candidate cell are reduced, and a delay of receiving reconfiguration is reduced. Alternatively, the terminal device may determine, based on the indication information sent by the network device, that the configuration information of the candidate cell is valid or invalid. In this way, the configuration information of the candidate cell is processed more flexibly. This avoids communication redundancy or data storage redundancy, reduces signaling overheads, and reduces a delay.

In an optional case, for that the configuration information of the candidate cell is valid or invalid, an embodiment is further included. For details, refer to FIG. 10. FIG. 10 is a flowchart of another communication method according to an embodiment of this application. As shown in FIG. 10, the method includes the following steps.

501. A first network device sends configuration information of a candidate cell to a terminal device.

502. The terminal device triggers a radio resource management RRC reestablishment process, where a cell selected in the RRC reestablishment process belongs to the first network device.

For example, when the terminal device detects that a radio link failure (Radio Link Failure, RLF) occurs on a connection with an MN, the terminal device triggers the RRC reestablishment process. To be specific, the terminal device performs cell selection, and attempts to resume a connection in a selected cell.

For example, the cell selected in the RRC reestablishment process may be an original serving cell (including a PCell or a PSCell) or another cell belonging to the first network device. The first network device is a base station or a CU in which the original serving cell is located.

For example, a cell that does not belong to the first network device may alternatively be selected in the RRC reestablishment process. In the RRC reestablishment process, the terminal device selects a cell based on signal quality of the cell. Therefore, the selected cell may not belong to the first network device.

503. The terminal device considers the configuration information of the candidate cell valid or stored.

If the cell selected in the RRC reestablishment process is the original serving cell (including the PCell or the PSCell) or the another cell belonging to the first network device, the terminal device considers the configuration information of the candidate cell valid or stored. In this case, because the terminal device attempts to resume the connection with the first network device, there is a high possibility that the previously received configuration information of the candidate cell can continue to be used, and the terminal device may consider the previously received configuration information of the candidate cell valid or stored. The configuration information of the candidate cell includes a CPAC configuration in a CPAC process, L1/L2 pre-configuration information in an L1/L2 handover process, or the like. For example, the configuration information of the candidate cell may be the CPA configuration in FIG. 4A, the CPC configuration in FIG. 4B-1 and FIG. 4B-2, or the L1/L2 pre-configuration information in FIG. 5A and FIG. 5B. In this process, communication overheads caused by performing transmission of the same configuration information of the candidate cell again can be reduced, and a reconfiguration delay can be reduced.

Correspondingly, if the cell selected in the RRC reestablishment process does not belong to the first network device, the terminal device considers the configuration information of the candidate cell invalid or released. In this case, the configuration information that is of the candidate cell and that is previously received by the terminal device may no longer adapt to a current cell handover process. The terminal device releases or discards the configuration information of the candidate cell, or considers the configuration information of the candidate cell invalid, so that overheads of storing or maintaining unadapted configuration information of the candidate cell by the terminal device can be reduced, and the terminal device is prevented from using inappropriate configuration information.

The embodiments corresponding to FIG. 9 and FIG. 10 may be combined with any one or more of the foregoing embodiments, and the two embodiments may also be combined with each other. A specific combination manner is the same as the combination manner in the foregoing embodiments. Details are not described herein again.

As shown in FIG. 11, a communication apparatus 600 includes a transceiver module 601 and a processing module 602. The communication apparatus 600 may be configured to implement a function of the terminal device or the network device in the method embodiments shown in FIG. 6A, FIG. 7A, FIG. 8, FIG. 9, and FIG. 10.

When the communication apparatus 600 is configured to implement a function of the terminal device in the method embodiment shown in FIG. 6A:
The transceiver module 601 is configured to receive first indication information, where the first indication information indicates at least one candidate cell and a first cell set corresponding to a first candidate cell in the at least one candidate cell, and the first cell set includes at least one cell. The processing module 602 is used by the terminal device to measure a cell in the first cell set based on the first indication information, where a serving cell of the terminal device is the first candidate cell.

When the communication apparatus 600 is configured to implement a function of the first network device in the method embodiment shown in FIG. 7A:
The processing module 602 is configured to determine first indication information, where the first indication information indicates at least one candidate cell and a first cell set corresponding to a first candidate cell in the at least one candidate cell, and the first cell set includes at least one cell. The transceiver module 601 is configured to send the first indication information.

When the communication apparatus 600 is configured to implement a function of the terminal device in the method embodiment shown in FIG. 7A:
The transceiver module 601 is configured to receive a first message, where the first message includes configuration information of a candidate cell.

The processing module 602 is configured to: when determining that a first condition is met, trigger the transceiver module 601 to send a second message to a first network device, where the second message is used to request to update the configuration information of the candidate cell, and the first condition includes at least one of the following: signal quality of a serving cell is less than or equal to a first threshold; a quantity of candidate cells that can be detected is less than or equal to a first quantity; or signal quality of the candidate cell is less than or equal to a second threshold.

When the communication apparatus 600 is configured to implement a function of the first network device in the method embodiment shown in FIG. 7A:
The processing module 602 is configured to determine configuration information of a candidate cell.

The transceiver module 601 is configured to send a first message, where the first message includes the configuration information of the candidate cell. A receiving module is configured to receive the first message or a measurement report, where the first message is used to request to update the configuration information of the candidate cell, and the measurement report includes signal quality of the candidate cell.

When the communication apparatus 600 is configured to implement a function of the terminal device in the method embodiment shown in FIG. 8:
The transceiver module 601 is configured to receive a first message, where the first message includes configuration information of a candidate cell.

The processing module 602 is configured to: when determining that a second condition is met, trigger the transceiver module 601 to send a measurement report to a first network device, where the measurement report includes signal quality of the candidate cell, and the second condition includes at least one of the following: signal quality of a serving cell is less than or equal to a second threshold; a quantity of candidate cells that can be detected is less than or equal to a second quantity; the signal quality of the candidate cell is less than or equal to a third threshold; a serving cell is switched to a first cell, where the first cell is a cell in a first cell set; or signal quality of one or more cells other than the candidate cell is greater than or equal to a fourth threshold.

When the communication apparatus 600 is configured to implement a function of the first network device in the method embodiment shown in FIG. 8:
The processing module 602 is configured to determine configuration information of a candidate cell.

The transceiver module 601 is configured to: send a first message, where the first message includes the configuration information of the candidate cell; and receive the first message or a measurement report, where the first message is used to request to update the configuration information of the candidate cell, and the measurement report includes signal quality of the candidate cell.

When the communication apparatus 600 is configured to implement a function of the terminal device in the method embodiment shown in FIG. 9:
The transceiver module 601 is configured to receive a third message sent by a first network device.

The processing module 602 is configured to: determine configuration information of a candidate cell, switch to a target cell indicated by the third message, and consider the configuration information of the candidate cell valid or stored; or is configured to: switch to a target cell indicated by the third message, and determine, based on indication information A from the first network device, that the configuration information of the candidate cell is valid or invalid.

When the communication apparatus 600 is configured to implement a function of the first network device in the method embodiment shown in FIG. 9:
The processing module 602 is configured to determine a third message, where the third message indicates a terminal device to switch to a target cell, and the target cell does not belong to a candidate cell.

The transceiver module 601 is configured to send the third message.

When the communication apparatus 600 is configured to implement a function of the terminal device in the method embodiment shown in FIG. 10:
The transceiver module 601 is configured to receive configuration information of a candidate cell.

The processing module 602 is configured to: trigger a radio resource management RRC reestablishment process, where a cell selected in the RRC reestablishment process belongs to a first network device; and consider the configuration information of the candidate cell valid or stored.

When the communication apparatus 600 is configured to implement a function of the network device in the method embodiment shown in FIG. 10:
The processing module 602 is configured to determine configuration information of a candidate cell.

The transceiver module 601 is configured to send the configuration information of the candidate cell to a terminal device.

For more detailed descriptions of the transceiver module 601 and the processing module 602, refer to related descriptions in the foregoing method embodiments. Details are not described herein again.

FIG. 12 is a diagram of a hardware structure of a communication apparatus according to an embodiment of this application. For a structure of the apparatus in FIG. 11, refer to the structure shown in FIG. 12. The communication apparatus 1000 includes a processor 111 and a transceiver 112. The processor 111 and the transceiver 112 are electrically coupled.

The processor 111 is configured to execute some or all computer program instructions in a memory. When the some or all computer program instructions are executed, the apparatus is enabled to perform the method according to any one of the foregoing embodiments.

The transceiver 112 is configured to communicate with another device, for example, receive a message from a first network element. The message includes an identifier of a multicast and/or broadcast service, a key of the multicast and/or broadcast service, and/or a key identifier of the multicast and/or broadcast service.

Optionally, the apparatus further includes a memory 113, configured to store the computer program instructions. Optionally, the memory 113 (a memory #1) is located inside the apparatus, the memory 113 (a memory #2) is integrated with the processor 111, or the memory 113 (a memory #3) is located outside the apparatus.

It should be understood that the communication apparatus 1000 shown in FIG. 12 may be a chip or a circuit. For example, the communication apparatus 1000 may be a chip or a circuit disposed in a terminal apparatus or a communication apparatus. The transceiver 112 may alternatively be a communication interface. The transceiver includes a receiver and a transmitter. Further, the communication apparatus 1000 may further include a bus system.

The processor 111, the memory 113, and the transceiver 112 are connected by using the bus system. The processor 111 is configured to execute the instructions stored in the memory 113, to control the transceiver to receive a signal and send a signal, to complete steps of the first device or the second device in the implementation method in this application. The memory 113 may be integrated into the processor 111, or may be disposed separately from the processor 111.

In an implementation, a function of the transceiver 112 may be implemented by a transceiver circuit or a dedicated transceiver chip. The processor 111 may be implemented by a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example rather than limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An embodiment of this application provides a computer storage medium, storing a computer program. The computer program includes the method applied to the terminal device in the foregoing embodiment.

An embodiment of this application provides a computer storage medium, storing a computer program. The computer program includes the method applied to the first network device in the foregoing embodiment.

An embodiment of this application provides a computer program product including instructions. When the computer program product runs on a computer, the computer is enabled to perform the method applied to the terminal device in the foregoing embodiment.

An embodiment of this application provides a computer program product including instructions. When the computer program product runs on a computer, the computer is enabled to perform the method applied to the first network device in the foregoing embodiment.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, in other words, may be located in one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell measurement method, wherein the method comprises:
receiving, by a terminal device, first indication information, wherein the first indication information indicates at least one candidate cell and a first cell set corresponding to a first candidate cell in the at least one candidate cell, and the first cell set comprises at least one cell; and
measuring, by the terminal device, a cell in the first cell set based on the first indication information, wherein a serving cell of the terminal device is the first candidate cell.

2. The method according to claim 1, wherein the at least one candidate cell is at least one candidate primary secondary cell for conditional primary secondary cell addition CPA or conditional primary secondary cell change CPC.

3. The method according to claim 1, wherein the at least one candidate cell is at least one candidate primary cell for layer 1/layer 2 handover.

4. The method according to any one of claims 1 to 3, wherein that the first indication information indicates the first cell set corresponding to the first candidate cell in the at least one candidate cell comprises:
the first indication information indicates, by indicating a physical cell identifier PCI of the at least one cell, the first cell set corresponding to the first candidate cell;
the first indication information indicates, by indicating a configuration identifier of the at least one cell, the first cell set corresponding to the first candidate cell, wherein the configuration identifier is associated with a configuration of a candidate cell in the at least one candidate cell; or
the first indication information indicates, by using bit mapping indication information, the first cell set corresponding to the first candidate cell.

5. The method according to any one of claims 1 to 4, wherein the at least one cell comprised in the first cell set is a cell in the at least one candidate cell.

6. A cell measurement method, wherein the method comprises:
determining, by a network device, first indication information, wherein the first indication information indicates at least one candidate cell and a first cell set corresponding to a first candidate cell in the at least one candidate cell, and the first cell set comprises at least one cell; and
sending, by the network device, the first indication information.

7. The method according to claim 6, wherein the at least one candidate cell is at least one candidate primary secondary cell for conditional primary secondary cell addition CPA or conditional primary secondary cell change CPC.

8. The method according to claim 6, wherein the at least one candidate cell is at least one candidate primary cell for layer 1/layer 2 handover.

9. The method according to any one of claims 6 to 8, wherein that the first indication information indicates the first cell set corresponding to the first candidate cell in the at least one candidate cell comprises:
the first indication information indicates, by indicating a physical cell identifier PCI of the at least one cell, the first cell set corresponding to the first candidate cell; or
the first indication information indicates, by indicating a configuration identifier of the at least one cell, the first cell set corresponding to the first candidate cell, wherein the configuration identifier is associated with a configuration of a candidate cell in the at least one candidate cell; or the first indication information indicates, by using bit mapping indication information, the first cell set corresponding to the first candidate cell.

10. The method according to any one of claims 6 to 9, wherein the at least one cell comprised in the first cell set is a cell in the at least one candidate cell.

11. A communication method, wherein the method comprises:
receiving, by a terminal device, a first message, wherein the first message comprises configuration information of a candidate cell; and
when a first condition is met, sending, by the terminal device, a second message to a first network device, wherein the second message is used to request to update the configuration information of the candidate cell, and the first condition comprises at least one of the following:
signal quality of a serving cell is less than or equal to a first threshold;
a quantity of candidate cells that can be detected by the terminal device is less than or equal to a first quantity; or
signal quality of the candidate cell is less than or equal to a second threshold.

12. A communication method, wherein the method comprises:
receiving, by a terminal device, a first message, wherein the first message comprises configuration information of a candidate cell; and
when a second condition is met, triggering, by the terminal device, sending of a measurement report to a first network device, wherein the measurement report comprises signal quality of the candidate cell, and the second condition comprises at least one of the following:
signal quality of a serving cell is less than or equal to a second threshold;
a quantity of candidate cells that can be detected is less than or equal to a second quantity;
the signal quality of the candidate cell is less than or equal to a third threshold;
a serving cell is switched to a first cell, wherein the first cell is a cell in a first cell set; or
signal quality of one or more cells other than the candidate cell is greater than or equal to a fourth threshold.

13. The method according to claim 11, wherein the configuration information of the candidate cell is conditional primary secondary cell addition CPA or conditional primary secondary cell change CPC configuration information, and the second message is used to update the CPA or CPC configuration information; or
the configuration information of the candidate cell is configuration information of a candidate cell for layer 1/layer 2 handover, and the second message is used to request to update the layer 1/layer 2 handover configuration information.

14. The method according to any one of claims 11 to 13, wherein the method further comprises:
receiving, by the terminal device, a third message, wherein the third message indicates the terminal device to switch to a target cell, and the target cell does not belong to the candidate cell; and
switching, by the terminal device, to the target cell, and performing any one of the following:
considering the configuration information of the candidate cell valid or stored; or
determining, based on indication information from the first network device, that the configuration information of the candidate cell is valid or invalid.

15. The method according to any one of claims 11 to 14, wherein the method further comprises:
triggering, by the terminal device, a radio resource management RRC reestablishment process, wherein a cell selected in the RRC reestablishment process belongs to the first network device; and
considering, by the terminal device, the configuration information of the candidate cell valid or stored.

16. A communication method, wherein the method comprises:
determining, by a first network device, configuration information of a candidate cell;
sending, by the first network device, a first message, wherein the first message comprises the configuration information of the candidate cell; and
receiving, by the first network device, the first message or a measurement report, wherein the first message is used to request to update the configuration information of the candidate cell, and the measurement report comprises signal quality of the candidate cell.

17. The method according to claim 16, wherein the configuration information of the candidate cell is conditional primary secondary cell addition CPA or conditional primary secondary cell change CPC configuration information, and the first message is used to request to update the CPA or CPC configuration information; or
the configuration information of the candidate cell is configuration information of a candidate cell for layer 1/layer 2 handover, and the first message is used to request to update the layer 1/layer 2 handover configuration information.

18. A communication apparatus, comprising a module configured to perform the method according to any one of claims 1 to 5, claims 6 to 10, claims 11 to 15, or claim 16 or 17.

19. A communication apparatus, wherein a structure of the apparatus comprises a processor, and further comprises a memory, wherein the processor is coupled to the memory, and is configured to execute computer program instructions stored in the memory, to enable the apparatus to perform the method according to any one of claims 1 to 5 or claims 11 to 15, or perform the method according to any one of claims 6 to 10 or claim 16 or 17.

20. A readable storage medium, configured to store instructions, wherein when the instructions are executed, the method according to any one of claims 1 to 5 or claims 11 to 15 is implemented, or the method according to any one of claims 6 to 10 or claim 16 or 17 is implemented.

21. A computer program product comprising instructions, wherein when the instructions are run on a communication apparatus, the method according to any one of claims 1 to 17 is implemented.
